# EUROPEAN PATENT APPLICATION

(11) **EP 4 761 410 A1**
(43) Date of publication of application: **17.06.2026**
(21) Application number: 24858379.1
(22) Date of filing: 20.08.2024
(51) Int. Cl.: H04W 72/0446

(54) **COMMUNICATION METHOD AND DEVICE**

(30) Priority: 26.08.2023 CN 202311086951
(71) Applicant: HUAWEI TECHNOLOGIES CO., LTD., Shenzhen 518129 (CN)
(72) Inventor: HUANG, Guogang, Shenzhen, Guangdong 518129 (CN); ZHANG, Hao, Shenzhen, Guangdong 518129 (CN); BAI, Xiaofei, Shenzhen, Guangdong 518129 (CN); ZHANG, Guanyu, Shenzhen, Guangdong 518129 (CN); GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Pfenning, Meinig & Partner mbB
(86) International application number: PCT/CN2024/113324
(87) International publication number: WO 2025/044836

(57) **Abstract**

Embodiments of this application provide a communication method and apparatus. The communication method is applied to a basic service set transition scenario. The communication method includes: sending a request frame to a first access point, where the request frame is used to trigger sending of a response frame, and a station is not associated with the first access point; receiving the response frame from the first access point, where the response frame includes a first transmit power for sending the response frame; determining downlink received signal quality; and sending the first transmit power and the downlink received signal quality to a second access point, where the first transmit power and the downlink received signal quality are used for a basic service set BSS transition decision, the second access point is associated with the station, and the first access point and the second access point belong to a same extended service set. IThis can improve efficiency of performing BSS transition by the AP associated with the current station.

## Description

This application claims priority to Chinese Patent Application No. 202311086951.0, filed with the China National Intellectual Property Administration on August 26, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In a wireless local area network (wireless local area network, WLAN) scenario, channel sounding (Channel sounding) is usually used by an access point (access point, AP) to calculate a precoding matrix for downlink beamforming (beamforming), and channel sounding is also referred to as beam training.

Before a current station (station, STA) performs basic service set (basic service set, BSS) transition, the current station needs to perform neighbor scanning and measurement, and report a measurement result of a neighboring AP to an AP associated with the current station, so that the AP associated with the current station can recommend, based on the measurement result, at least one neighboring AP to the current station for BSS transition.

Due to a difference between transmit powers of the station and the access point, asymmetry between uplink and downlink exists. In this case, the AP associated with the current station may select an inferior candidate AP for BSS transition, resulting in lower efficiency of performing BSS transition by the AP associated with the current station.

### SUMMARY

This application provides a communication method and apparatus, to improve efficiency of performing BSS transition by an AP associated with a current station.

According to a first aspect, a communication method is provided. The method is applied to a station, and includes: sending a request frame to a first access point, where the request frame is used to trigger sending of a response frame, and the station is not associated with the first access point; receiving the response frame from the first access point, where the response frame includes a first transmit power for sending the response frame; determining downlink received signal quality; and sending the first transmit power and the downlink received signal quality to a second access point, where the first transmit power and the downlink received signal quality are used for basic service set BSS transition, the second access point is associated with the station, and the first access point and the second access point belong to a same extended service set.

It should be understood that, in the following, the "request frame" may be represented by a "first request frame", the "response frame" may be represented by a "first response frame", and the "station" may be represented by a "first station".

In the foregoing technical solution, the station sends, to the second access point, the determined downlink received signal quality and the first transmit power corresponding to the first access point, so that more information is provided for the second access point in a decision-making process of a target access point for BSS transition. This can help the second access point make a more proper selection, and avoids selecting an inferior neighboring access point as the target access point based on only the downlink received signal quality, thereby ensuring quality of data transmission between the station and the target access point after BSS transition, and improving efficiency of BSS transition performed by a currently associated AP.

With reference to the first aspect, in some implementations of the first aspect, the request frame is a second null data packet announcement NDPA frame, and the response frame is a first NDPA frame; or the request frame is a transmit power control TPC request frame, and the response frame is a TPC response frame; or the request frame is a measurement pilot request frame, and the response frame is a measurement pilot frame.

With reference to the first aspect, in some implementations of the first aspect, when the request frame is the second NDPA frame, and the response frame is the first NDPA frame, the method further includes: receiving a first null data packet NDP frame from the first access point; and determining the downlink received signal quality includes: determining the downlink received signal quality based on the first NDP frame.

In the foregoing technical solution, downlink channel quality measurement is performed between the station and the first access point based on control frames, for example, the NDPA frame and the NDP frame. Because an interval between the control frames is short, time for neighbor scanning and measurement by the station can be greatly shortened, thereby reducing impact of a neighbor measurement and scanning process on data transmission of the station.

With reference to the first aspect, in some implementations of the first aspect, after sending the request frame to the first access point, the method further includes: granting a remaining transmit opportunity to the first access point, where the remaining transmit opportunity is a remaining transmit opportunity of the station.

In the foregoing technical solution, in the process in which the station performs neighbor scanning and measurement, a transmit opportunity between the station and the second access point is granted to the first access point, that is, a process in which the first access point performs beam training is combined with the process of performing neighbor scanning and measurement, to improve overall operation efficiency.

With reference to the first aspect, in some implementations of the first aspect, the first NDPA frame includes a first AID field, and a first value of the first AID field indicates that a field corresponding to the first transmit power exists.

With reference to the first aspect, in some implementations of the first aspect, the second NDPA frame further includes a requested first number of repetitions of a long training field LTFs set in the first NDP frame, or includes a requested second number of repetitions of the first NDP frame; and the response frame includes the first number of repetitions or the second number of repetitions.

In the foregoing technical solution, when performing channel sounding based on the first NDP frame, the station may perform a plurality of measurements based on the first NDP frame that is repeated for a plurality of times, thereby improving downlink channel sounding accuracy of the station.

With reference to the first aspect, in some implementations of the first aspect, the second NDPA frame further includes a first NDP present field, and the first NDP present field indicates whether a second NDP frame is sent following the second NDPA frame.

In the foregoing technical solution, the NDP frame is set as an optional message frame by using the field, so that message sending can be flexibly performed. For example, if only the station needs to perform downlink channel sounding, bandwidth resources can be saved, and signaling overheads can be reduced.

With reference to the first aspect, in some implementations of the first aspect, the first NDPA frame includes a second NDP present field, and a second value of the second NDP present field indicates that the first NDP frame is sent following the first NDPA frame.

With reference to the first aspect, in some implementations of the first aspect, when the first NDP present field indicates that the second NDP frame is sent following the second NDPA frame, the method further includes: sending the second NDP frame to the first access point, where the second NDP frame is used by the first access point to measure first uplink received signal quality; and the first NDPA frame further includes the first uplink received signal quality.

In the foregoing technical solution, the station may simultaneously obtain channel quality between the station and the first access point. This can avoid a case in which, due to asymmetry between uplink and downlink, the second access point subsequently selects an inferior candidate access point for BSS transition.

With reference to the first aspect, in some implementations of the first aspect, when the request frame is the TPC request frame, and the response frame is the TPC response frame, types of the TPC request frame and the TPC response frame are public action frames; and determining the downlink received signal quality includes: determining the downlink received signal quality based on the TPC response frame.

In the foregoing technical solution, the first transmit power of the first access point is obtained based on the TPC request frame and the TPC response frame, and a current measurement mode in which downlink received signal quality measurement is performed based on a beacon frame or a probe request frame is used. In this solution, because the TPC request frame and the TPC response frame carry less information, channel resource consumption and signaling overheads can be reduced. In addition, this helps the second access point subsequently make a more proper selection, and avoids selecting an inferior neighboring access point as a target access point based on only the downlink received signal quality, thereby ensuring quality of data transmission between the station and the target access point after BSS transition.

With reference to the first aspect, in some implementations of the first aspect, when the request frame is the measurement pilot request frame, and the response frame is the measurement pilot frame, determining the downlink received signal quality includes: determining the downlink received signal quality based on the measurement pilot frame.

In the foregoing technical solution, sending of the measurement pilot frame is triggered by using the measurement pilot request frame, and a current measurement mode of the measurement pilot frame is still used. Compared with current periodic detection of the measurement pilot frame, this can reduce time for performing neighbor scanning and measurement by the station, and ensure data transmission of the station.

With reference to the first aspect, in some implementations of the first aspect, the first transmit power is equal to a transmit power corresponding to a beacon frame or a probe response frame sent by the first access point.

In the foregoing technical solution, when the first transmit power is a transmit power of the beacon frame or the probe response frame, that is, when the first transmit power is a maximum transmit power of the first access point, a subsequently obtained transmission path loss can be more accurate. For example, for a case in which a distance between the station and the first access point is long, the first access point sends a first NDP response frame at the maximum transmit power, to avoid a case in which transmission path loss estimation between the station and the first access point is inaccurate due to a distance factor.

With reference to the first aspect, in some implementations of the first aspect, before sending the request frame to the first access point, the method further includes: receiving a radio measurement request frame from the second access point, where the radio measurement request frame is used to request a channel quality measurement result between the station and at least one neighboring access point corresponding to the station, and the at least one neighboring access point includes the first access point; and sending a radio measurement report frame to the second access point, where the first transmit power and the downlink received signal quality are carried in the radio measurement report frame.

In the foregoing technical solution, the second access point may obtain both the uplink received signal quality and the downlink received signal quality between the first access point and the station, so that asymmetry between uplink and downlink caused by a large difference between transmit powers of the first access point and the station can be well handled, thereby helping the second access point select a more appropriate target access point for BSS transition, and further ensuring data transmission quality of the station.

With reference to the first aspect, in some implementations of the first aspect, the radio measurement request frame includes first indication information, and the first indication information indicates the station to send the request frame.

With reference to the first aspect, in some implementations of the first aspect, the radio measurement request frame further includes second indication information, and the second indication information indicates identifier information of the first access point.

With reference to the first aspect, in some implementations of the first aspect, the radio measurement request frame further includes third indication information, and the third indication information indicates that the radio measurement report frame does not include information that is related to the first access point and that is other than the first transmit power and the downlink received signal quality.

According to a second aspect, a communication method is provided. The method is applied to a first access point, and includes: receiving a request frame from a station, where the station is not associated with the first access point. Triggering sending of a response frame to the station, where the response frame includes a first transmit power for sending the response frame, and the first transmit power is used for basic service set BSS transition.

It should be understood that technical effect corresponding to the technical solution in the second aspect is similar to that in the first aspect. Details are not described herein again.

With reference to the second aspect, in some implementations of the second aspect, the request frame is a second null data packet announcement NDPA frame, and the response frame is a first NDPA frame; or the request frame is a transmit power control TPC request frame, and the response frame is a TPC response frame; or the request frame is a measurement pilot request frame, and the response frame is a measurement pilot frame.

With reference to the second aspect, in some implementations of the second aspect, when the request frame is the second NDPA frame, and the response frame is the first NDPA frame, the method further includes: sending a first null data packet NDP frame to the station, where the first NDP frame is used by the first station to determine downlink received signal quality.

With reference to the second aspect, in some implementations of the second aspect, after sending the request frame to the first access point, the method further includes: receiving a remaining transmit opportunity granted by the station, where the remaining transmit opportunity is a remaining transmit opportunity of the station, the station is associated with the second access point, and the first access point and the second access point belong to a same extended service set.

With reference to the second aspect, in some implementations of the second aspect, the first NDPA frame includes a first AID field, and a first value of the first AID field indicates that a field corresponding to the first transmit power exists.

With reference to the second aspect, in some implementations of the second aspect, the second NDPA frame further includes a requested first number of repetitions of a long training field LTFs set in the first NDP frame, or includes a requested second number of repetitions of the first NDP frame; and the first NDPA frame includes the first number of repetitions or the second number of repetitions.

With reference to the second aspect, in some implementations of the second aspect, the second NDPA frame further includes a first NDP present field, and the first NDP present field indicates whether a second NDP frame is sent following the second NDPA frame.

With reference to the second aspect, in some implementations of the second aspect, the first NDPA includes a second NDP present field, and a second value of the second NDP present field indicates that the first NDP frame is sent following the first NDPA frame.

With reference to the second aspect, in some implementations of the second aspect, when the first NDP present field indicates that the second NDP frame is sent following the second NDPA, after receiving the request frame from the station, the method further includes: receiving the second NDP frame from the station; and determining first uplink received signal quality based on the second NDP frame, where the first NDPA frame further includes the first uplink received signal quality.

With reference to the second aspect, in some implementations of the second aspect, when the request frame is the TPC request frame, and the response frame is the TPC response frame, types of the TPC request frame and the TPC response frame are public action frames.

With reference to the second aspect, in some implementations of the second aspect, the first transmit power is equal to a transmit power corresponding to a beacon frame or a probe response frame sent by the first access point.

According to a third aspect, a communication method is provided. The method is applied to a second access point, and includes: receiving a first transmit power and downlink received signal quality that are sent by a station, where the first transmit power is a transmit power corresponding to a response frame sent by a first access point to the station, the downlink received signal quality is downlink received signal quality between the station and the first access point, and the station is not associated with the first access point; and performing basic service set BSS transition based on the first transmit power and the downlink received signal quality, where the second access point is associated with the station, and the first access point and the second access point belong to a same extended service set.

It should be understood that technical effect corresponding to the technical solution in the third aspect is similar to that in the first aspect. Details are not described herein again.

With reference to the third aspect, in some implementations of the third aspect, the method further includes: sending a radio measurement request frame to the station, where the radio measurement request frame is used to request a channel quality measurement result between the station and at least one neighboring access point corresponding to the station, and the at least one neighboring access point includes the first access point; and receiving a radio measurement report frame from the station, where the radio measurement report frame includes the first transmit power and the downlink received signal quality.

With reference to the third aspect, in some implementations of the third aspect, the method further includes: receiving a fourth transmit power corresponding to the station; and performing basic service set BSS transition based on the first transmit power and the downlink received signal quality includes: determining a transmission path loss between the station and the first access point based on the first transmit power and the downlink received signal quality; and estimating second uplink received signal quality based on the transmission path loss and the fourth transmit power, where the second uplink received signal quality is uplink received signal quality between the first access point and the station.

With reference to the third aspect, in some implementations of the third aspect, the radio measurement request frame includes first indication information, and the first indication information indicates the station to send the request frame.

With reference to the third aspect, in some implementations of the third aspect, the radio measurement request frame further includes second indication information, and the second indication information indicates identifier information of the first access point.

With reference to the third aspect, in some implementations of the third aspect, the radio measurement request frame further includes third indication information, and the third indication information indicates that the radio measurement report frame does not include information that is related to the first access point and that is other than the first transmit power and the downlink received signal quality.

It should be understood that, in any implementation of the first aspect to the third aspect, the "downlink received signal quality" may also be represented as "first downlink received signal quality".

According to a fourth aspect, a communication method is provided. The method is applied to a station, and includes: sending a third NDPA frame to a first access point, where the third NDPA frame is used to trigger sending of a fourth NDP frame, the station is not associated with the first access point, and the third NDPA frame includes an expected second transmit power corresponding to the fourth NDP frame sent by the first access point; receiving the fourth NDP frame sent by the first access point at the second transmit power; obtaining second downlink received signal quality based on the fourth NDP frame; and sending the second downlink received signal quality to a second access point, where the second access point is associated with the station, the first access point and the second access point belong to a same extended service set, and the second transmit power and the second downlink received signal quality are used for basic service set BSS transition.

In the foregoing technical solution, the station directly sends, to the first access point by using the NDPA frame, the expected transmit power corresponding to the first access point, and then the first access point sends the NDP frame at the expected transmit power, so that the second access point can properly select an appropriate target access point when subsequently performing BSS transition. For example, if the second transmit power, that is, the expected transmit power, is learned by the second access point from the first access point in advance, the second access point may learn both the second transmit power and the second downlink received signal quality. In this case, the second access point can select an appropriate target access point for BSS transition, and signaling overheads of an air interface are also reduced.

With reference to the fourth aspect, in some implementations of the fourth aspect, the second transmit power is a maximum transmit power of the first access point.

With reference to the fourth aspect, in some implementations of the fourth aspect, the third NDPA frame includes a second AID field, and a third value of the second AID field indicates that a field corresponding to the second transmit power exists.

With reference to the fourth aspect, in some implementations of the fourth aspect, the third NDPA frame further includes a requested number of repetitions of a long training field LTFs set in the fourth NDP frame, or includes a requested number of repetitions of the fourth NDP frame.

With reference to the fourth aspect, in some implementations of the fourth aspect, the third NDPA frame further includes a third NDP present field, and the third NDP present field indicates whether a third NDP frame is sent following the third NDPA frame.

With reference to the fourth aspect, in some implementations of the fourth aspect, when the third NDP present field indicates that the third NDP frame is sent following the third NDPA frame, the method further includes: sending the third NDP frame to the first access point, where the third NDP frame is used by the first access point to measure third uplink received signal quality.

According to a fifth aspect, a communication method is provided. The method is applied to a first access point, and includes: receiving a third NDPA frame from a station, where the third NDPA frame is used to trigger sending of a fourth NDP frame, the station is not associated with the first access point, and the third NDPA frame includes an expected second transmit power corresponding to the fourth NDP frame sent by the first access point; and sending the fourth NDP frame to the station at the second transmit power, where the second transmit power is used for basic service set BSS transition.

In the foregoing technical solution, the first access point sends the NDP frame at the expected transmit power, so that the second access point can properly select an appropriate target access point when subsequently performing BSS transition. For example, if the second transmit power, that is, the expected transmit power, is learned by the second access point from the first access point in advance, the second access point may learn both the second transmit power and second downlink received signal quality. In this case, the second access point can select an appropriate target access point for BSS transition, and signaling overheads of an air interface are also reduced.

With reference to the fifth aspect, in some implementations of the fifth aspect, the second transmit power is a maximum transmit power of the first access point.

With reference to the fifth aspect, in some implementations of the fifth aspect, the third NDPA frame includes a second AID field, and a third value of the second AID field indicates that a field corresponding to the second transmit power exists.

With reference to the fifth aspect, in some implementations of the fifth aspect, the third NDPA frame further includes a requested number of repetitions of a long training field LTFs set in the fourth NDP frame, or includes a requested number of repetitions of the fourth NDP frame.

With reference to the fifth aspect, in some implementations of the fifth aspect, the third NDPA frame further includes a third NDP present field, and the third NDP present field indicates whether a third NDP frame is sent following the third NDPA frame.

With reference to the fifth aspect, in some implementations of the fifth aspect, when the third NDP present field indicates that the third NDP frame is sent following the third NDPA frame, the method further includes: sending the third NDP frame to the first access point, where the third NDP frame is used by the first access point to measure third uplink received signal quality.

According to a sixth aspect, a communication method is provided. The method is applied to a station, and includes: determining that a first access point is performing channel sounding, where the station is not associated with the first access point; receiving a fifth NDPA frame and a fifth NDP frame from the first access point, where the fifth NDPA frame includes a third transmit power for sending the third NDPA frame and the fifth NDP frame; determining third downlink received signal quality based on the fifth NDP frame; and sending the third transmit power and a third downlink received signal instruction to a second access point, where the third transmit power and the third downlink received signal instruction are used for basic service set BSS transition, the station is associated with the second access point, and the first access point and the second access point belong to a same extended service set.

In the foregoing technical solution, when the station finds that the first access point is performing channel sounding, the station does not need to send a request frame, a procedure used by the first access point for channel sounding still continues, and the third transmit power is carried in the fifth NDPA frame. This helps the second access point subsequently select a more appropriate target access point for BSS transition by using fewer signaling overheads, thereby ensuring subsequent data transmission quality of the station.

With reference to the sixth aspect, in some implementations of the sixth aspect, the fifth NDPA frame includes a third AID field, and a fourth value of the third AID field indicates that a field corresponding to the third transmit power exists.

With reference to the sixth aspect, in some implementations of the sixth aspect, the third transmit power is equal to a transmit power corresponding to a beacon frame or a probe response frame sent by the first access point.

According to a seventh aspect, a communication method is provided. The method is applied to any one of at least one candidate access point, and includes: receiving a first frame from a station, where the first frame includes identifier information of a second access point associated with the station, the any candidate access point is not associated with the station, and the any candidate access point and the second access point belong to a same extended service set; receiving a second frame from the station, where the second frame is used to obtain second uplink received signal quality; and sending the second uplink received signal quality to the second access point.

In the foregoing technical solution, the candidate access point measures the uplink received signal quality, and directly feeds back the uplink received signal quality to the second access point. This can reduce air interface resources, and also does not affect data transmission of the station.

With reference to the seventh aspect, in some implementations of the seventh aspect, the first frame is a sixth NDPA frame, and the second frame is a sixth NDP frame.

According to an eighth aspect, a communication apparatus is provided. The apparatus includes a transceiver unit and a processing unit. The transceiver unit is configured to send a request frame to a first access point, where the request frame is used to trigger sending of a response frame, and a station is not associated with the first access point; the transceiver unit is configured to receive the response frame from the first access point, where the response frame includes a first transmit power for sending the response frame; the processing unit is configured to determine downlink received signal quality; and the transceiver unit is configured to send the first transmit power and the downlink received signal quality to a second access point, where the first transmit power and the downlink received signal quality are used for basic service set BSS transition, the second access point is associated with the station, and the first access point and the second access point belong to a same extended service set.

It should be understood that, in the following, the "request frame" may be represented by a "first request frame", the "response frame" may be represented by a "first response frame", and the "station" may be represented by a "first station".

It should be understood that, for technical effect corresponding to the technical solution in the eighth aspect, refer to the first aspect. Details are not described herein again.

With reference to the eighth aspect, in some implementations of the eighth aspect, the request frame is a second null data packet announcement NDPA frame, and the response frame is a first NDPA frame; or the request frame is a transmit power control TPC request frame, and the response frame is a TPC response frame; or the request frame is a measurement pilot request frame, and the response frame is a measurement pilot frame.

With reference to the eighth aspect, in some implementations of the eighth aspect, when the request frame is the second NDPA frame, and the response frame is the first NDPA frame, the transceiver unit is further configured to receive a first null data packet NDP frame from the first access point; and the processing unit is specifically configured to determine the downlink received signal quality based on the first NDP frame.

With reference to the eighth aspect, in some implementations of the eighth aspect, after sending the request frame to the first access point, the transceiver unit is further configured to grant a remaining transmit opportunity to the first access point, where the remaining transmit opportunity is a remaining transmit opportunity of the station.

With reference to the eighth aspect, in some implementations of the eighth aspect, the first NDPA frame includes a first AID field, and a first value of the first AID field indicates that a field corresponding to the first transmit power exists.

With reference to the eighth aspect, in some implementations of the eighth aspect, the second NDPA frame further includes a requested first number of repetitions of a long training field LTFs set in the first NDP frame, or includes a requested second number of repetitions of the first NDP frame; and the response frame includes the first number of repetitions or the second number of repetitions.

With reference to the eighth aspect, in some implementations of the eighth aspect, the second NDPA frame further includes a first NDP present field, and the first NDP present field indicates whether a second NDP frame is sent following the second NDPA frame.

With reference to the eighth aspect, in some implementations of the eighth aspect, the first NDPA frame includes a second NDP present field, and a second value of the second NDP present field indicates that the first NDP frame is sent following the first NDPA frame.

With reference to the eighth aspect, in some implementations of the eighth aspect, when the first NDP present field indicates that the second NDP frame is sent following the second NDPA frame, the transceiver unit is further configured to send the second NDP frame to the first access point, where the second NDP frame is used by the first access point to measure first uplink received signal quality; and the first NDPA frame further includes the first uplink received signal quality.

With reference to the eighth aspect, in some implementations of the eighth aspect, when the request frame is the TPC request frame, and the response frame is the TPC response frame, types of the TPC request frame and the TPC response frame are public action frames. The processing unit is specifically configured to determine the downlink received signal quality based on the TPC response frame.

With reference to the eighth aspect, in some implementations of the eighth aspect, when the request frame is the measurement pilot request frame, and the response frame is the measurement pilot frame, the processing unit is specifically configured to determine the downlink received signal quality based on the measurement pilot frame.

With reference to the eighth aspect, in some implementations of the eighth aspect, the first transmit power is equal to a transmit power corresponding to a beacon frame or a probe response frame sent by the first access point.

With reference to the eighth aspect, in some implementations of the eighth aspect, before sending the request frame to the first access point, the transceiver unit is further configured to receive a radio measurement request frame from the second access point, where the radio measurement request frame is used to request a channel quality measurement result between the station and at least one neighboring access point corresponding to the station, and the at least one neighboring access point includes the first access point; and the transceiver unit is further configured to send a radio measurement report frame to the second access point, where the first transmit power and the downlink received signal quality are carried in the radio measurement report frame.

With reference to the eighth aspect, in some implementations of the eighth aspect, the radio measurement request frame includes first indication information, and the first indication information indicates the station to send the request frame.

With reference to the eighth aspect, in some implementations of the eighth aspect, the radio measurement request frame further includes second indication information, and the second indication information indicates identifier information of the first access point.

With reference to the eighth aspect, in some implementations of the eighth aspect, the radio measurement request frame further includes third indication information, and the third indication information indicates that the radio measurement report frame does not include information that is related to the first access point and that is other than the first transmit power and the downlink received signal quality.

According to a ninth aspect, a communication apparatus is provided. The apparatus includes a transceiver unit. The transceiver unit is configured to receive a request frame from a station, where the station is not associated with a first access point; and the transceiver unit is configured to trigger sending of a response frame to the station, where the response frame includes a first transmit power for sending the response frame, and the first transmit power is used for basic service set BSS transition.

It should be understood that technical effect corresponding to the technical solution in the ninth aspect is similar to that in the second aspect. Details are not described herein again.

With reference to the ninth aspect, in some implementations of the ninth aspect, the request frame is a second null data packet announcement NDPA frame, and the response frame is a first NDPA frame; or the request frame is a transmit power control TPC request frame, and the response frame is a TPC response frame; or the request frame is a measurement pilot request frame, and the response frame is a measurement pilot frame.

With reference to the ninth aspect, in some implementations of the ninth aspect, when the request frame is the second NDPA frame, and the response frame is the first NDPA frame, the transceiver unit is further configured to send a first null data packet NDP frame to the station, where the first NDP frame is used by the first station to determine downlink received signal quality.

With reference to the ninth aspect, in some implementations of the ninth aspect, after sending the request frame to the first access point, the transceiver unit is further configured to receive a remaining transmit opportunity granted by the station, where the remaining transmit opportunity is a remaining transmit opportunity of the station, the station is associated with a second access point, and the first access point and the second access point belong to a same extended service set.

With reference to the ninth aspect, in some implementations of the ninth aspect, the first NDPA frame includes a first AID field, and a first value of the first AID field indicates that a field corresponding to the first transmit power exists.

With reference to the ninth aspect, in some implementations of the ninth aspect, the second NDPA frame further includes a requested first number of repetitions of a long training field LTFs set in the first NDP frame, or includes a requested second number of repetitions of the first NDP frame; and the first NDPA frame includes the first number of repetitions or the second number of repetitions.

With reference to the ninth aspect, in some implementations of the ninth aspect, the second NDPA frame further includes a first NDP present field, and the first NDP present field indicates whether a second NDP frame is sent following the second NDPA frame.

With reference to the ninth aspect, in some implementations of the ninth aspect, the first NDPA includes a second NDP present field, and a second value of the second NDP present field indicates that the first NDP frame is sent following the first NDPA frame.

With reference to the ninth aspect, in some implementations of the ninth aspect, when the first NDP present field indicates that the second NDP frame is sent following the second NDPA, after receiving the request frame from the station, the apparatus further includes: receiving the second NDP frame from the station; and determining first uplink received signal quality based on the second NDP frame, where the first NDPA frame further includes the first uplink received signal quality.

With reference to the ninth aspect, in some implementations of the ninth aspect, when the request frame is the TPC request frame, and the response frame is the TPC response frame, types of the TPC request frame and the TPC response frame are public action frames.

With reference to the ninth aspect, in some implementations of the ninth aspect, the first transmit power is equal to a transmit power corresponding to a beacon frame or a probe response frame sent by the first access point.

According to a tenth aspect, a communication apparatus is provided. The apparatus includes a transceiver unit and a processing unit. The transceiver unit is configured to receive a first transmit power and downlink received signal quality that are sent by a station, where the first transmit power is a transmit power corresponding to a response frame sent by a first access point to the station, the downlink received signal quality is downlink received signal quality between the station and the first access point, and the station is not associated with the first access point; and the processing unit is configured to perform basic service set BSS transition based on the first transmit power and the downlink received signal quality, where a second access point is associated with the station, and the first access point and the second access point belong to a same extended service set.

It should be understood that technical effect corresponding to the technical solution in the tenth aspect is similar to that in the third aspect. Details are not described herein again.

With reference to the tenth aspect, in some implementations of the tenth aspect, the transceiver unit is further configured to send a radio measurement request frame to the station, where the radio measurement request frame is used to request a channel quality measurement result between the station and at least one neighboring access point corresponding to the station, and the at least one neighboring access point includes the first access point; and the transceiver unit is further configured to receive a radio measurement report frame from the station, where the radio measurement report frame includes the first transmit power and the downlink received signal quality.

With reference to the tenth aspect, in some implementations of the tenth aspect, the transceiver unit is further configured to receive a fourth transmit power corresponding to the station; and the processing unit is specifically configured to determine a transmission path loss between the station and the first access point based on the first transmit power and the downlink received signal quality; and the processing unit is specifically configured to estimate second uplink received signal quality based on the transmission path loss and the fourth transmit power, where the second uplink received signal quality is uplink received signal quality between the first access point and the station.

With reference to the tenth aspect, in some implementations of the tenth aspect, the radio measurement request frame includes first indication information, and the first indication information indicates the station to send the request frame.

With reference to the tenth aspect, in some implementations of the tenth aspect, the radio measurement request frame further includes second indication information, and the second indication information indicates identifier information of the first access point.

With reference to the tenth aspect, in some implementations of the tenth aspect, the radio measurement request frame further includes third indication information, and the third indication information indicates that the radio measurement report frame does not include information that is related to the first access point and that is other than the first transmit power and the downlink received signal quality.

It should be understood that, in any implementation of the eighth aspect to the tenth aspect, the "downlink received signal quality" may also be represented as "first downlink received signal quality".

According to an eleventh aspect, a communication apparatus is provided. The apparatus includes a transceiver unit and a processing unit. The transceiver unit is configured to send a third NDPA frame to a first access point, where the third NDPA frame is used to trigger sending of a fourth NDP frame, a station is not associated with the first access point, and the third NDPA frame includes an expected second transmit power corresponding to the fourth NDP frame sent by the first access point; the transceiver unit is configured to receive the fourth NDP frame sent by the first access point at the second transmit power; the processing unit is specifically configured to obtain second downlink received signal quality based on the fourth NDP frame; and the transceiver unit is configured to send the second downlink received signal quality to a second access point, where the second access point is associated with the station, the first access point and the second access point belong to a same extended service set, and the second transmit power and the second downlink received signal quality are used for basic service set BSS transition.

It should be understood that technical effect corresponding to the technical solution in the eleventh aspect is similar to that in the fourth aspect. Details are not described herein again.

With reference to the eleventh aspect, in some implementations of the eleventh aspect, the second transmit power is a maximum transmit power of the first access point.

With reference to the eleventh aspect, in some implementations of the eleventh aspect, the third NDPA frame includes a second AID field, and a third value of the second AID field indicates that a field corresponding to the second transmit power exists.

With reference to the eleventh aspect, in some implementations of the eleventh aspect, the third NDPA frame further includes a requested number of repetitions of a long training field LTFs set in the fourth NDP frame, or includes a requested number of repetitions of the fourth NDP frame.

With reference to the eleventh aspect, in some implementations of the eleventh aspect, the third NDPA frame further includes a third NDP present field, and the third NDP present field indicates whether a third NDP frame is sent following the third NDPA frame.

With reference to the eleventh aspect, in some implementations of the eleventh aspect, when the third NDP present field indicates that the third NDP frame is sent following the third NDPA frame, the transceiver unit is further configured to send the third NDP frame to the first access point, where the third NDP frame is used by the first access point to measure third uplink received signal quality.

According to a twelfth aspect, a communication apparatus is provided. The apparatus includes a transceiver unit. The transceiver unit is configured to receive a third NDPA frame from a station, where the third NDPA frame is used to trigger sending of a fourth NDP frame, the station is not associated with a first access point, and the third NDPA frame includes an expected second transmit power corresponding to the fourth NDP frame sent by the first access point; and the transceiver unit is configured to send the fourth NDP frame to the station at the second transmit power, where the second transmit power is used for basic service set BSS transition.

It should be understood that technical effect corresponding to the technical solution in the twelfth aspect is similar to that in the fifth aspect. Details are not described herein again.

With reference to the twelfth aspect, in some implementations of the twelfth aspect, the second transmit power is a maximum transmit power of the first access point.

With reference to the twelfth aspect, in some implementations of the twelfth aspect, the third NDPA frame includes a second AID field, and a third value of the second AID field indicates that a field corresponding to the second transmit power exists.

With reference to the twelfth aspect, in some implementations of the twelfth aspect, the third NDPA frame further includes a requested number of repetitions of a long training field LTFs set in the fourth NDP frame, or includes a requested number of repetitions of the fourth NDP frame.

With reference to the twelfth aspect, in some implementations of the twelfth aspect, the third NDPA frame further includes a third NDP present field, and the third NDP present field indicates whether a third NDP frame is sent following the third NDPA frame.

With reference to the twelfth aspect, in some implementations of the twelfth aspect, when the third NDP present field indicates that the third NDP frame is sent following the third NDPA frame, the transceiver unit is further configured to receive the third NDP frame from the station, where the third NDP frame is used by the first access point to measure third uplink received signal quality.

According to a thirteenth aspect, a communication apparatus is provided. The apparatus includes a processing unit and a transceiver unit. The processing unit is configured to determine that a first access point is performing channel sounding, where a station is not associated with the first access point; the transceiver unit is configured to receive a fifth NDPA frame and a fifth NDP frame from the first access point, where the fifth NDPA frame includes a third transmit power for sending the third NDPA frame and the fifth NDP frame; the processing unit is configured to determine third downlink received signal quality based on the fifth NDP frame; and the transceiver unit is configured to send the third transmit power and a third downlink received signal instruction to a second access point, where the third transmit power and the third downlink received signal instruction are used for basic service set BSS transition, the station is associated with the second access point, and the first access point and the second access point belong to a same extended service set.

It should be understood that technical effect corresponding to the technical solution in the thirteenth aspect is similar to that in the sixth aspect. Details are not described herein again.

With reference to the thirteenth aspect, in some implementations of the thirteenth aspect, the fifth NDPA frame includes a third AID field, and a fourth value of the third AID field indicates that a field corresponding to the third transmit power exists.

With reference to the thirteenth aspect, in some implementations of the thirteenth aspect, the third transmit power is equal to a transmit power corresponding to a beacon frame or a probe response frame sent by the first access point.

According to a fourteenth aspect, a communication apparatus is provided. The apparatus includes a transceiver unit. The transceiver unit is configured to receive a first frame from a station, where the first frame includes identifier information of a second access point associated with the station, any candidate access point is not associated with the station, and the any candidate access point and the second access point belong to a same extended service set; and the transceiver unit is configured to receive a second frame from the station, where the second frame is used to obtain second uplink received signal quality; and the transceiver unit is configured to send the second uplink received signal quality to the second access point.

It should be understood that technical effect corresponding to the technical solution in the fourteenth aspect is similar to that in the seventh aspect. Details are not described herein again.

With reference to the fourteenth aspect, in some implementations of the fourteenth aspect, the first frame is a sixth NDPA frame, and the second frame is a sixth NDP frame.

According to a fifteenth aspect, a communication apparatus is provided. The apparatus includes: a memory, configured to store a program; and a processor, configured to execute a computer program or instructions stored in the memory. When the computer program or the instructions stored in the memory are executed, the processor is configured to perform the method according to any one of the implementations of the first aspect to the seventh aspect.

In an implementation, the apparatus is a station. In another implementation, the apparatus is a first access point or a second access point. In another implementation, the apparatus is any one of at least one candidate access point.

According to a sixteenth aspect, this application provides a processor, configured to perform the method according to any one of the implementations of the first aspect to the seventh aspect. In a process of performing the methods, a process of sending the information and a process of obtaining/receiving the information in the foregoing methods may be understood as a process of outputting the information by the processor and a process of receiving the inputted information by the processor. When outputting the foregoing information, the processor outputs the foregoing information to an interface, and transmits the information through the interface. After the foregoing information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, or if operations such as related transmitting, sending and obtaining/receiving do not conflict with actual functions or internal logic in related descriptions, the operations may be understood as operations such as outputting, receiving, and inputting, or may be understood as transmitting, sending and receiving operations performed by a radio frequency circuit and an antenna. This is not limited in this application.

In an implementation process, the processor may be a processor specially configured to perform these methods, or a processor, for example, a general-purpose processor, that executes a computer program or instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a seventeenth aspect, a communication system is provided. The system includes an apparatus configured to implement any implementation of the first aspect, an apparatus configured to implement any implementation of the second aspect, and an apparatus configured to implement any implementation of the third aspect; or the system includes an apparatus configured to implement any implementation of the first aspect and an apparatus configured to implement any implementation of the third aspect.

According to an eighteenth aspect, a computer-readable storage medium is provided. The computer-readable medium stores program code to be executed by a device, and the program code is for performing the method according to any one of the implementations of the first aspect to the seventh aspect.

According to a nineteenth aspect, a computer program product including instructions is provided. When the computer program product is run on a computer, the computer is enabled to perform the method according to any one of the implementations of the first aspect to the seventh aspect.

According to a twentieth aspect, a chip is provided. The chip includes a processor and a communication interface. The processor reads, through the communication interface, instructions stored in a memory, to perform the method according to any one of the implementations of the first aspect to the seventh aspect.

In an implementation, the chip may further include the memory. The memory stores a computer program or instructions. The processor is configured to execute the computer program or the instructions stored in the memory. When the computer program or the instructions are executed, the processor is configured to perform the method according to any one of the implementations of the first aspect to the seventh aspect.

### BRIEF DESCRIPTION OF DRAWINGS

FIG. 1 is a diagram of an application scenario according to an embodiment of this application;
FIG. 2 is a diagram of interaction in a neighbor measurement method according to an embodiment of this application;
FIG. 3 is a diagram of a format of a radio measurement request frame according to an embodiment of this application;
FIG. 4 is a diagram of a format of a radio measurement report frame according to an embodiment of this application;
FIG. 5 is a schematic flowchart of interaction in a communication method according to an embodiment of this application;
FIG. 6 is a schematic flowchart of interaction in another communication method according to an embodiment of this application;
FIG. 7 is a schematic flowchart of interaction in still another communication method according to an embodiment of this application;
FIG. 8 is a diagram of formats of a first NDP request frame and a first NDP response frame according to an embodiment of this application;
FIG. 9 is schematic flowchart of interaction in channel sounding performed by an access point according to an embodiment of this application;
FIG. 10 is a schematic flowchart of yet another communication method according to an embodiment of this application;
FIG. 11 is a schematic flowchart of interaction in yet another communication method according to an embodiment of this application;
FIG. 12 is a diagram of formats of a third NDPA frame and a fourth NDP frame according to an embodiment of this application;
FIG. 13 is a schematic flowchart of interaction in yet another communication method according to an embodiment of this application;
FIG. 14 is a diagram of a format of a fifth NDPA frame according to an embodiment of this application;
FIG. 15 is a schematic flowchart of yet another communication method according to an embodiment of this application;
FIG. 16 is a diagram of formats of a TPC request frame and a TPC response frame according to an embodiment of this application;
FIG. 17 is a schematic flowchart of yet another communication method according to an embodiment of this application;
FIG. 18 is a diagram of a format of a measurement pilot frame according to an embodiment of this application;
FIG. 19 is a schematic flowchart of yet another communication method according to an embodiment of this application;
FIG. 20 is a diagram of formats of a measurement request field and a measurement report field according to an embodiment of this application;
FIG. 21 is a schematic flowchart of yet another communication method according to an embodiment of this application;
FIG. 22 is a diagram of a communication apparatus 2200 according to an embodiment of this application;
FIG. 23 is a diagram of a structure of a communication apparatus 2300 according to an embodiment of this application; and
FIG. 24 is a diagram of a chip system 2400 according to an embodiment of this application.

### DESCRIPTION OF EMBODIMENTS

The following describes technical solutions of this application with reference to accompanying drawings.

For ease of understanding embodiments of this application, the following points are described.

First, in this application, unless otherwise stated or there is a logic conflict, terms and/or descriptions in different embodiments are consistent and may be mutually referenced, and technical features in different embodiments may be combined based on an internal logic relationship thereof, to form a new embodiment.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one item (piece) of a, b, and c may indicate a, b, c, a and b, a and c, b and c, or a, b, and c. Each of a, b, and c may be in a singular form or a plural form.

Third, in this application, "first", "second", and various numerical numbers (for example, #1 and #2) are merely used for distinguishing for ease of description, but are not intended to limit the scope of embodiments of this application, for example, are intended to distinguish between different access points but not to describe a specific order or sequence. It should be understood that the objects described in such a way are interchangeable in an appropriate circumstance, so that a solution other than embodiments of this application can be described.

It should be noted that, in the following, meanings represented by the information #1, the resource indication information #1, and the resource request information #1 are different from each other. It should be understood that names of information are merely examples for description. This is not limited in this application, and should not constitute any limitation on the technical solutions of this application.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, it does not mean that a determining action after these condition conjunctions is the only condition for implementing the result, and other additional conditions may be included to implement the result.

Fifth, in this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in this application, "indicate" may include "directly indicate" and "indirectly indicate". When a piece of indication information is described as indicating A, the indication information may directly indicate A or indirectly indicate A, but it does not necessarily mean that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, "store" may refer to being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

The technical solutions provided in embodiments of this application are applicable to a wireless local area network WLAN scenario. For example, IEEE 802.11-related standards such as 802.11be, 802.11ad, 802.11ay, or 802.11bf, are supported. For another example, Wi-Fi 8 is supported. The technical solutions provided in embodiments of this application may be further applied to an ultra wideband (ultra wideband, UWB)-based wireless personal area network system, for example, the 802.15 series standards, or may be further applied to a sensing (sensing) system, for example, the 802.11bf series standards. The 802.11be standard is referred to as an extremely high throughput (extremely high throughput, EHT) standard. 802.11bf includes two major categories of standards: a low frequency (sub-7 GHz) and a high frequency (60 GHz). Sub-7 GHz is implemented mainly based on standards such as 802.11ax, 802.11be, and a next-generation standard. 60 GHz is implemented mainly based on standards such as 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a fifth generation (5th generation, 5G) system or new radio (new radio, NR), a future sixth generation (6th generation, 6G) system, an internet of things (internet of things, IoT) network, or a vehicle-to-everything (vehicle to x, V2X).

The foregoing communication systems applicable to this application are merely examples for description, and communication systems applicable to this application are not limited thereto. This is uniformly described herein, and details are not described below again.

For ease of understanding of the solutions in embodiments of this application, technical terms in embodiments of this application are first briefly described.

### 1. Basic service set (basic service set, BSS)

The BSS is a basic component (building block) of an 802.11 network, and is used to describe a group of mobile devices that communicate with each other in an 802.11 WLAN.

There are two types of basic service sets. One is a basic service set in an infrastructure mode, including one access point (access point, AP) and several stations (station, STA). The other is a basic service set in an independent mode, including several STAs.

Specifically, each basic service set has a unique identifier, which is referred to as a basic service set identifier (basic service set identifier, BSSID), and corresponds to a MAC address of the AP. The BSS in embodiments of this application is a BSS in the infrastructure mode. An AP and a STA included in the BSS of this type may be referred to as an AP and a STA that are associated with each other. For example, an AP and a STA included in a BSS #1 are associated with each other.

### 2. Distributed system (distributed system, DS)

The DS is a system in which a plurality of BSSs are interconnected to integrate a local area network, and an extended service set (extended service set, ESS) is constructed via the DS. All BSSs in a same ESS have a same service set identifier (service set identifier, SSID). A same ESS may include different access points (access point, AP), and these different APs may communicate with each other via the DS.

### 3. BSS transition

BSS transition is a process in which a STA switches (or roams) from a currently associated AP to another neighboring AP. In other words, BSS transition is a process in which the STA switches from a currently associated AP #1 to an AP #2. A BSS #1 corresponding to the AP 1 and a BSS #2 corresponding to the AP 2 belong to a same ESS.

### 4. Octet (Octet)

### One octet includes eight bits (bit).

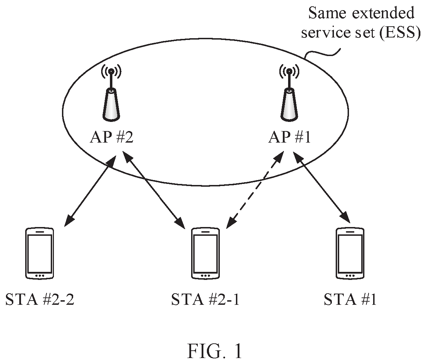

FIG. 1 is a diagram of an application scenario according to an embodiment of this application. As shown in FIG. 1, a measurement method provided in this embodiment of this application is applicable to a STA and an AP. The application scenario shown in FIG. 1 is a scenario in which STAs before BSS transition in a same ESS perform neighbor scanning and measurement. An AP #1 and an AP #2 belong to a same ESS. A STA #2-1 and a STA #2-2 are associated with the AP #2, and the AP #2, the STA #2-1, and the STA #2-2 belong to a BSS #2. A STA #1 is associated with the AP #1. The AP #1 and a STA #1-1 belong to a BSS #1, and the BSS #1 and the BSS #2 are in the same ESS. The following briefly describes types of the AP and the STA. It should be understood that the AP #1 and the AP #2 may be any one of the following AP types, and the STA #2-1 and the STA #2-2 may also be any one of the following STA types.

The AP may be an access point used by a terminal (for example, a mobile phone) to access a wired (or wireless) network, and is mainly deployed at home, in a building, and in a campus. A typical coverage radius is dozens of meters to 100-odd meters. Certainly, the AP may alternatively be deployed outdoors. The AP acts as a bridge that connects a wired network and a wireless network, primarily serving to connect various wireless network clients together and then connect the wireless network to the Ethernet.

Specifically, the AP may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may alternatively support one or more standards of the institute of electrical and electronics engineers (Institute of Electrical and Electronics Engineers, IEEE) 802.11 family, such as 802.11a, 802.11b, 802.11g, 802.11n, 802.11ac, 802.11ax, 802.11be, 802.11ad, and 802.11ay.

The STA may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in the 5G network, a terminal device in the future 6G network, a terminal device in the PLMN, or the like. This is not limited in embodiments of this application. The STA may be a device that supports a WLAN standard. For example, the STA may support one or more standards of the IEEE 802.11 family, such as 802.11a, 802.11b, 802.11g, 802.11n, 802.11ac, 802.11ax, 802.11be, 802.11ad, and 802.11ay.

For example, the STA may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the STA may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

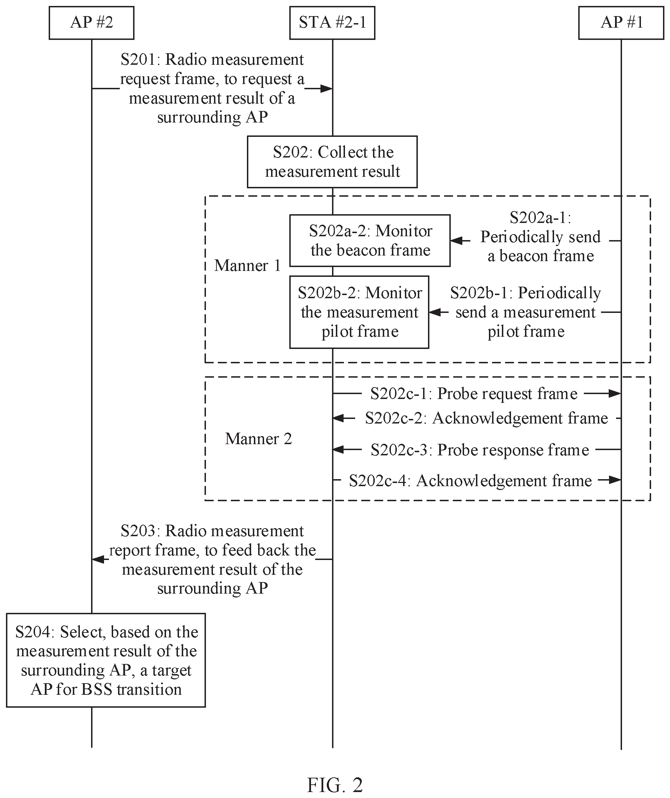

FIG. 2 is a diagram of interaction in a neighbor measurement method according to an embodiment of this application.

S201: An AP #2 sends a radio measurement request (Radio Measurement Request) frame to a STA #1-1, where the radio measurement request frame includes at least one measurement request element (Measurement Request element), and the radio measurement request frame is used to request a channel measurement result of a surrounding neighboring AP.

It should be understood that the surrounding AP and the AP #2 may belong to a same ESS, or may not belong to a same ESS. The solution of the present invention focuses on a case in which the surrounding AP and the AP #2 belong to a same ESS. The AP #2 is associated with a STA #2-1.

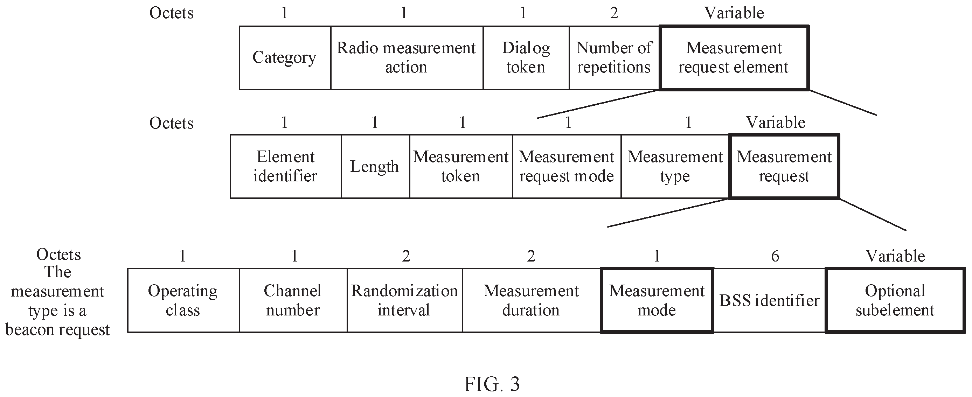

FIG. 3 is a diagram of a format of the radio measurement request frame according to an embodiment of this application.

As shown in FIG. 3, the radio measurement request frame includes a category (Category) field, a radio measurement action (Radio Measurement Action) field, a dialog token (Dialog Token) field, a number of repetitions (Number of Repetitions) field, and a measurement request element (Measurement Request elements) field.

The category field indicates a category to which the action frame belongs, and a size of the category field is 1 octet (Octet), that is, 8 bits (bit). For example, for radio measurement (Radio Measurement), the field is set to 5. Meanings corresponding to values of the radio measurement action field are shown in Table 1. As shown in Table 1, for a radio measurement request, a value of the radio measurement action field is 0. When the dialog token field is set to a non-zero value, it indicates specific request/report interaction. The number of repetitions field indicates a number of repeated measurements of all measurements requested in the frame.

**Table 1**

| Value of the radio measurement action field | Description |
|---|---|
| 0 | Radio measurement request (Radio Measurement Request) |
| 1 | Radio measurement report (Radio Measurement Report) |
| 2 | Link measurement request (Link Measurement Request) |
| 3 | Link measurement report (Link Measurement Report) |
| 4 | Neighbor report request (Neighbor Report Request) |
| 5 | Neighbor report response (Neighbor Report Response) |
| 6-255 | Reserved (Reserved) |

The measurement request element field carries zero or a plurality of measurement request elements, and the field is shown in FIG. 3. The measurement request element field may include an element identifier (Element ID) field, a length (Length) field, a measurement token (Measurement Token) field, a measurement request mode (Measurement Request Mode) field, a measurement type (Measurement Type) field, and a measurement request (Measurement Request) field.

The element identifier field indicates an identifier corresponding to the element, and a size of the element identifier field is 1 octet. For the measurement request element, the field may be set to 38. The length field indicates a length of the element. It should be understood that the length field includes a total length of the element identifier field and the length field. A size of the length field is 1 octet. The measurement token field is set to a non-zero value, and the measurement token field is used to uniquely identify a corresponding measurement request element in the measurement request element field in the radio measurement request frame. A size of the measurement token field is 1 octet.

The measurement request mode field includes a parallel (Parallel) subfield, an enable (Enable) subfield, a request (Request) subfield, a report (Report) subfield, a duration mandatory (Duration Mandatory) subfield, and a reserved (Reserved) field. A size of the measurement request mode field is 1 octet, that is, 8 bits. The parallel subfield indicates whether a plurality of measurement requests need to be performed in parallel or in sequence, and a size of the parallel subfield is 1 bit. The enable subfield is used to distinguish whether the request is a measurement request, a request for triggering a destination station, or a request for autonomously reporting a report, and a size of the enable subfield is 1 bit. The request subfield indicates whether the destination station is allowed to send a measurement request of a specified measurement type, and a size of the request subfield is 1 bit. The report subfield indicates whether the destination station is allowed to send a measurement report of a specified measurement type, and a size of the report subfield is 1 bit. The duration mandatory subfield indicates whether duration of specified measurement is mandatory, and a size of the duration mandatory subfield is 1 bit. A size of the reserved field is 3 bits.

The measurement type field indicates a measurement type requested by the measurement request. For example, when a value of the measurement type field is 5, the measurement type field indicates that the measurement type requested by the measurement request is a beacon (Beacon) request.

The measurement request field is used to carry corresponding measurement request information. A format of the measurement request field shown in FIG. 3 is a corresponding measurement request field when the measurement type is a beacon request. The measurement request field includes an operating class (Operating Class) field, a channel number (Channel Number) field, a randomization interval (Randomization Interval) field, a measurement duration (Measurement Duration) field, a measurement mode (Measurement Mode) field, a BSS identifier (BSSID) field, and an optional subelement (Optional subelements) field. The operating class field indicates an operating class of a corresponding channel, and a size of the operating class field is 1 octet. The channel number field indicates a corresponding channel number, a size of the channel number field is 1 octet, and a receive end may determine a corresponding channel frequency and channel bandwidth based on the operating class field and the channel number field. The randomization interval field indicates an upper limit of a random delay that may be introduced before measurement, and a size of the randomization interval field is 2 octets. The measurement duration field indicates expected or mandatory measurement duration in a unit of a time unit (time unit, TU), for example, 1.024 microseconds, and a size of the measurement duration field is 2 octets. The measurement mode field indicates a measurement mode used for measurement, and a specific setting is shown in Table 2 below. A size of the measurement mode field is 6 octets.

**Table 2**

| Mode | Value of the measurement mode field |
|---|---|
| Passive (Passive) | 0 |
| Active (Active) | 1 |
| Beacon table (Beacon Table) | 2 |
| Reserved (Reserved) | 3-255 |

When a value of the measurement mode field is 0, it indicates passive monitoring, that is, a STA performs passive monitoring, for example, monitors a beacon frame. When a value of the measurement mode field is 1, it indicates active probing, that is, the STA sends a probe request (Probe Request), and an AP returns a probe response (Probe Response) to perform surrounding neighbor scanning and measurement. When a value of the measurement mode field is 2, it indicates a beacon table (Beacon Table), that is, the STA directly feeds back a recorded measurement result to the associated AP without performing additional measurement.

The BSS identifier field indicates a BSSID of a neighboring AP (which may also be referred to as a measured AP) that performs beacon request measurement. When set to a broadcast address, the BSS identifier field indicates that all APs on a corresponding channel are measured. A size of the BSS identifier field is 6 octets. The optional subelement field is used to carry zero or a plurality of subelements. Details are shown in Table 3. A size of the optional subelement field is variable (variable).

**Table 3**

| Subelement identifier (Subelement ID) | Name | Extensible |
|---|---|---|
| 0 | Service set identifier (service set identifier, SSID) | No |
| 1 | Beacon report (Beacon reporting) | Yes |
| 2 | Report detail (Reporting Detail) | Yes |
| 3-9 | Reserved | |
| 10 | Request | No |
| 11 | Extended request (Extended Request) | No |
| 12-50 | Reserved | |
| 51 | Access point channel report (AP Channel Report) | No |
| 52-162 | Reserved | |
| 163 | Wide bandwidth channel switch (Wide Bandwidth Channel Switch) | Yes |
| 164 | Last beacon report indication request (Last Beacon Report Indication Request) | No |
| 165-220 | Reserved | |
| 221 | Vendor specific (Vendor Specific) | Determined by the vendor |
| 222-255 | Reserved | |

For example, the SSID indicates the STA to scan only a neighbor of a given SSID. The beacon report indicates a trigger condition for the STA to report the measurement report. The report detail indicates that the STA needs to report content in a measured beacon frame or probe response frame. The access point channel report indicates channels on which the STA has a high probability of finding a neighboring AP.

S202: The STA #2-1 collects the measurement result.

It should be understood that the STA #2-1 may perform neighbor scanning and measurement based on the radio measurement request frame, to collect a measurement result of a surrounding neighboring AP.

The following uses the AP #2 in surrounding APs as an example to describe a specific manner in which the STA #2-1 collects the measurement result. A number of APs that collect the measurement result is not limited in this embodiment of this application.

Manner 1: The STA #2-1 periodically detects a downlink signal sent by an AP #1, to measure downlink channel quality between the STA #2-1 and the AP #1.

For example, in S202a-1, the AP #1 periodically sends the beacon frame on the determined channel. S202a-2: The STA #2-1 monitors the beacon frame on each given channel. The measurement result may be downlink channel quality obtained based on the measured beacon frame, and information such as capability information or an operation parameter that is related to the AP #1 and that is included in the beacon frame.

A sending periodicity of the AP #1 may be 100 milliseconds (ms).

In this example of Manner 1, the measurement mode for collecting the measurement result of the AP #2 is the passive mode. In other words, a value of the measurement mode field in the measurement request field in the measurement request element field in the radio measurement request frame corresponding to this example is 0, as shown in Table 2.

In this example of Manner 1, the periodically sent beacon frame carries a large amount of information (for example, information such as capability information and an operation parameter of the AP #2).

The STA #2-1 obtains the measurement result of the AP #1 in the measurement mode in Manner 1. Because the STA #2-1 needs to monitor the beacon frame on the given channel, and a periodicity for sending the beacon frame by the AP #1 is long, this occupies the STA #2-1 for a long period of time. Consequently, the STA #2-1 that performs neighbor scanning and measurement severely affects data transmission of the STA #2-1.

For another example, in S202b-1, the AP #1 periodically sends a measurement pilot frame (Measurement Pilot frame) on the determined channel.

S202b-2: The STA #2-1 monitors the measurement pilot frame on each given channel. The measurement result may be a monitored measurement pilot frame.

It should be understood that, similar to the foregoing example, the measurement mode is also a passive mode, and a difference lies in that a periodicity for sending the measurement pilot frame in this example is shorter than the periodicity for sending the beacon frame.

Although in the process in which the STA #2-1 performs neighbor scanning and measurement by using this example, time of occupying the STA #1-1 is shorter than that in the previous example, data transmission of the STA #1-1 is still affected to some extent, and a measurement manner in this example is rarely implemented in a product.

### Manner 2

S202c-1: The STA #2-1 sends a probe request (Probe Request) frame to the AP #1.

S202c-2: The AP #1 sends an acknowledgement (Acknowledgement) frame to the STA #2-1.

S202c-3: The AP #1 sends a probe response (Probe Response) frame to the STA #2-1. The measurement result may be a probe response frame.

S202c-4: The STA #2-1 sends an acknowledgement (Acknowledgement) frame to the AP #1.

The measurement mode for collecting the measurement result of the AP #1 in Manner 2 is the active mode. In other words, a value of the measurement mode field in the measurement request field in the measurement request element field in the radio measurement request frame corresponding to Manner 2 is 1, as shown in Table 2.

It should be understood that, because both the probe request frame in S202c-1 and the probe response frame in S202c-3 are management frames, for the receive end of the AP #1 that receives the probe request frame, the AP #1 needs to first return the acknowledgement frame after receiving the probe request frame (for example, S202c-2), and then contends for a channel again to send the probe response frame (for example, S202c-3). Subsequently, the STA #2-1 returns the acknowledgement frame (S202c-4).

In Manner 2, the probe request frame and the probe response frame also carry a large amount of information (for example, capability information and operation parameter information of the AP #1).

The STA #2-1 obtains the measurement result of the AP #1 in the measurement mode in Manner 2. Because time for interaction between the STA #2-1 and the AP #1 is long, this occupies the STA #2-1 for a long period of time. Consequently, a process of performing neighbor scanning and measurement severely affects data transmission of the STA #2-1.

S203: The STA #2-1 sends a radio measurement report (Radio Measurement Response) frame to the AP #2, where the radio measurement report frame is used to feed back the measurement result of the neighboring AP.

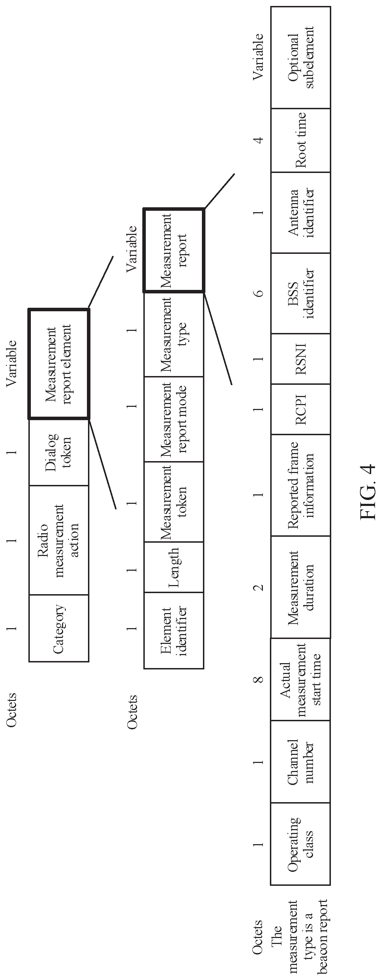

FIG. 4 is a diagram of a format of the radio measurement report frame according to an embodiment of this application.

As shown in FIG. 4, the radio measurement report frame includes a category (Category) field, a radio measurement action (Radio Measurement Action) field, a dialog token (Dialog Token) field, and a measurement report element (Measurement Report elements) field.

The category field indicates a category to which the action frame belongs, and a size of the category field is 1 octet. For example, for radio measurement (Radio Measurement), the field is set to 5. Meanings corresponding to values of the radio measurement action field are shown in Table 1. As shown in Table 1, for the radio measurement report, a value of the radio measurement action field is 1. When the dialog token field is set to a non-zero value, it indicates specific request/report interaction.

The measurement report element field carries zero or a plurality of measurement report elements, and the field is shown in FIG. 4. The measurement report element field may include an element identifier (Element ID) field, a length (Length) field, a measurement token (Measurement Token) field, a measurement report mode (Measurement Report Mode) field, a measurement type (Measurement Type) field, and a measurement report (Measurement Report) field. Functions of the element identifier field, the length field, and the measurement token field in the measurement report element field are similar to functions of corresponding fields in the measurement request element field. Details are not described herein again.

The measurement report mode field includes a late (Late) subfield, an incapable (Incapable) subfield, a refused (Refused) subfield, and a reserved (Reserved) subfield. A size of the measurement report mode field is 1 octet, that is, 8 bits. The late subfield indicates whether the STA cannot execute a measurement request, and a size of the late subfield is 1 bit. For example, when a value of the late subfield is set to 1, the measurement request is too late. The incapable subfield indicates whether the station cannot generate a requested measurement report, and a size of the incapable subfield is 1 bit. For example, when a value of the incapable subfield is set to 1, the STA cannot generate the requested measurement report. The refused subfield indicates whether the STA refuses to generate the requested measurement report, and a size of the refused subfield is 1 bit. A size of the reserved field is 5 bits.

The measurement type field indicates a measurement type reported in the measurement report. For example, when a value of the measurement type field is 5, the measurement type field indicates that the measurement type reported in the measurement report is a beacon (Beacon) report.

The measurement report field is used to carry zero or a plurality of measurement reports. A format of the measurement report field shown in FIG. 4 is a corresponding measurement report field when the measurement type is a beacon report. The measurement report field includes an operating class (Operating Class) field, a channel number (Channel Number) field, an actual measurement start time (Actual Measurement Start Time) field, a measurement duration (Measurement Duration) field, a reported frame information (Reported Frame Information) field, a received channel power indicator (received channel power indicator, RCPI) field, a received signal noise indicator (received signal noise indicator, RSNI) field, a BSS identifier (BSSID) field, an antenna identifier (Antenna ID) field, a root time (parent timing synchronization function, parent TSF) field, and an optional subelement (Optional subelements) field. Functions of the operating class field and the channel number field in the measurement report field are similar to functions of corresponding fields in the measurement request field. Details are not described herein again.

The actual measurement start time field indicates start time for performing measurement by the STA, and a size of the actual measurement start time field is 8 octets. The measurement duration field indicates measurement duration of the STA, and a size of the measurement duration field is 2 octets. The reported frame information field indicates reported frame information, and a size of the reported frame information field is 1 octet, that is, 8 bits. The reported frame information includes a condensed physical layer type (Condensed PHY Type) field and a reported frame type (Reported Frame Type) field. The condensed physical layer type field indicates a physical layer type used by the measured frame, and a size of the condensed physical layer type field is 7 bits. The reported frame type field indicates a frame type of the measured frame, and a size of the reported frame type field is 1 bit. When the reported frame type field is set to 0, the reported frame type is a beacon frame or a probe response frame. When the reported frame type field is set to 1, the reported frame type is a measurement pilot frame.

The RCPI field indicates channel power measured based on a beacon frame, a probe response frame, or a measurement pilot frame, and a size of the field is 1 octet. The RSNI field indicates a signal-to-noise ratio measured based on a beacon frame, a probe response frame, or a measurement pilot frame, and a size of the field is 1 octet. The BSS identifier field indicates a BSS identifier corresponding to a measured beacon frame, probe response frame, or measurement pilot frame, and a size of the field is 6 octets. The antenna identifier field indicates a corresponding antenna identifier for receiving a measured signal, and a size of the field is 1 octet. The root time field indicates least significant 4 bytes of a time synchronization function of the STA, corresponding to time for receiving a to-be- measured beacon frame, measurement pilot frame, or probe response frame, and a size of the field is 4 octets. The optional subelement field for the beacon report is used to carry zero or a plurality of subelements. Details are shown in Table 4. A size of the optional subelement field is variable (variable).

**Table 4**

| Subelement identifier (Subelement ID) | Name | Extensible |
|---|---|---|
| 0 | Reserved | |
| 1 | Reported frame body (Reported Frame Body) | No |
| 2 | Reported frame body fragment identifier (Reported Frame Body Fragment ID) | No |
| 3-162 | Reserved | |
| 163 | Wide bandwidth channel switch (Wide Bandwidth Channel Switch) | Yes |
| 164 | Last beacon report indication request (Last Beacon Report Indication Request) | No |
| 165-220 | Reserved | |
| 221 | Vendor specific (Vendor Specific) | Determined by the vendor |
| 222-255 | Reserved | |

For example, the reported frame body subelement is used to carry a part or all of a frame body of the measured frame. When a value of a field corresponding to a report detail subelement in the optional subelement field in the measurement request field corresponding to the beacon request is set to 0, the optional subelement field in the measurement report field corresponding to the beacon report does not include the reported frame body subelement.

S204: The AP #2 determines a target AP based on the measurement result of the surrounding AP.

The target AP may include at least one neighboring AP.

Optionally, the AP #2 sends a BSS transition request to the STA #2-1, where the BSS transition request includes the target AP.

It should be understood that, in S203, the STA #2-1 may report, to the AP #2 by using the radio measurement report frame, the measurement result collected in S202 and information such as the capability information or the operation parameter that is of the AP #1 and that is included in the beacon frame or the probe response frame.

However, the beacon frame and the probe response frame carry a large amount of information. For example, information such as the capability information and the operation parameter of the AP #1 is included. This results in large signaling overheads. In a scenario of different APs in a same ESS, information such as capability information or operation parameters between the different APs may be exchanged via a DS, and there is no need to waste air interface resources and feed back the information to the AP #2 via the STA #2-1.

In addition, different STAs implement neighbor scanning and measurement in different manners. For example, even if the AP #1 enables, by using the radio measurement request frame, the STA #1-1 to perform neighbor scanning and measurement, the STA #1-1 of some vendors directly ignores the request and does not perform neighbor scanning and measurement. For another example, calculation manners of the RCPI field and the RSNI field that are fed back by the STA #1-1 of different vendors are different.

Finally, regardless of any one of the foregoing measurement modes, asymmetry between uplink and downlink may exist between the STA #2-1 and the AP #1, that is, there is a large difference between downlink channel quality measured by the STA #2-1 and uplink channel quality between the AP #1 and the STA #2-1. In this case, a candidate AP that is selected by the AP #2 based on the downlink measurement result collected by the STA #2-1 and that is for BSS transition may not be the most appropriate. This affects subsequent data transmission quality of the STA #2-1.

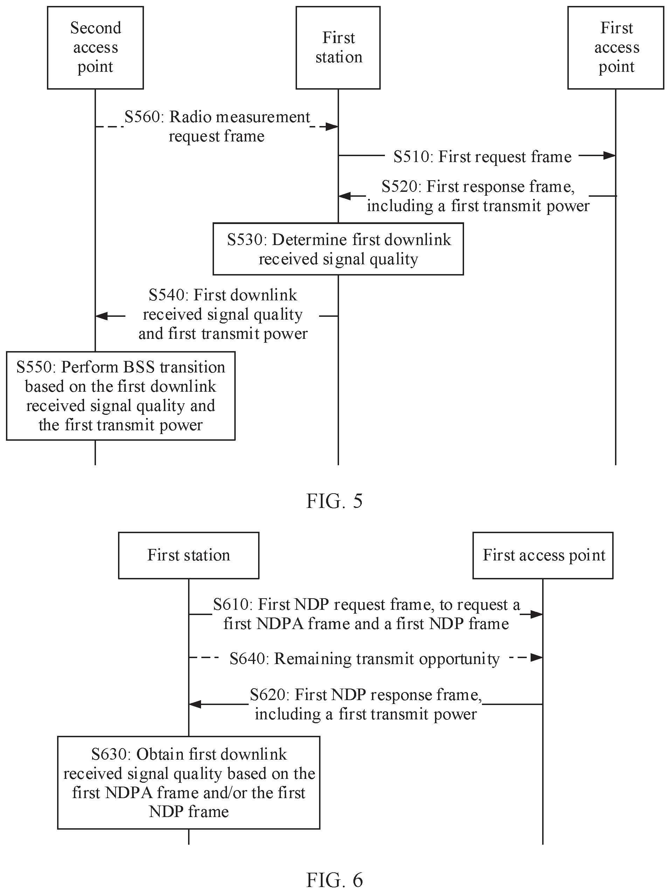

For the foregoing problem, embodiments of this application provide a communication method and apparatus. The following provides detailed descriptions with reference to FIG. 5 to FIG. 24.

FIG. 5 is a schematic flowchart of interaction in a communication method according to an embodiment of this application. It should be understood that, in the interaction diagram shown in FIG. 5, a first station, a first access point, and a second access point are used as execution bodies of the interaction diagram to illustrate the corresponding method. However, the execution bodies of the interaction diagram are not limited in this application. For example, the first station in FIG. 5 may alternatively be a chip, a chip system, or a processor that supports the first station in implementing the corresponding method, or may be a logical module or software that can implement all or a part of functions of the first station. The first access point in FIG. 5 may alternatively be a chip, a chip system, or a processor that supports the first access point in implementing the corresponding method, or may be a logical module or software that can implement all or a part of functions of the first access point. The second access point in FIG. 5 may alternatively be a chip, a chip system, or a processor that supports the second access point in implementing the corresponding method, or may be a logical module or software that can implement all or a part of functions of the second access point.

It should be understood that the first station is not associated with the first access point, the first station is associated with the second access point, and the first access point and the second access point belong to a same ESS.

It should be understood that, in the following, the "request frame" may be represented by a "first request frame", the "response frame" may be represented by a "first response frame", the "station" may be represented by a "first station", and the "downlink received signal quality" may be represented by "downlink received signal quality".

Optionally, in S560, the second access point sends a radio measurement request frame to the first station, where the radio measurement request frame is used to request a channel quality measurement result between the first station and at least one neighboring access point, and the at least one neighboring access point includes the first access point.

In a possible implementation, the radio measurement frame includes identifier indication information of the at least one neighboring access point.

For example, the radio measurement request frame includes second indication information, and the second indication information indicates identifier information of the first access point.

Specifically, a BSS identifier field in a measurement request field in a measurement request element field of the radio measurement request frame may include the identifier indication information of the at least one neighboring access point, for example, include address information of the first access point.

In a possible implementation, the radio measurement request frame includes first indication information, and the first indication information indicates the first station to send the first request frame.

It should be understood that the first indication information indicates a new measurement mode, that is, the communication method between the first station and the first access point provided in this embodiment of this application, namely, channel sounding between the first station and the first access point.

For example, a value of a measurement mode field in the measurement request field in the measurement request element field of the radio measurement request frame is set to 3, or the first indication information may be represented by combining an existing value of the measurement mode field with another field. A specific form of the first indication information is not limited in this embodiment of this application.

In a possible implementation, the radio measurement request frame further includes third indication information, and the third indication information indicates that a subsequent radio measurement report frame does not include information that is related to the first access point and that is other than a first transmit power and first downlink received signal quality.

Specifically, a value of a report detail field in an optional subelement field in the measurement request field in the measurement request element field of the radio measurement request frame is set to 0. It should be understood that the third indication information may alternatively be represented by using another field. This is not limited in this embodiment of this application.

It should be understood that the communication method provided in this embodiment may be applied between the first station and each neighboring access point. The following uses the first access point as an example for detailed description.

S510: The first station sends the first request frame to the first access point, where the first request frame is used to trigger sending of the first response frame.

S520: The first access point sends the first response frame to the first station, where the first response frame includes the first transmit power for sending the first response frame.

It should be understood that the first request frame and the first response frame in this embodiment of this application are not request and response frames in a strict sense, and may include a plurality of forms.

The first transmit power included in the first response frame may be first transmit power information itself or indication information of the first transmit power. This is not limited in this embodiment of this application. In other words, the first response frame includes the first transmit power information used when the first response frame is sent. It should be understood that another transmit power in this embodiment of this application may alternatively be a transmit power in this application or indication information of the another transmit power. This is not specially described subsequently.

In a possible implementation, the first request frame is a second null data packet announcement (null data packet announcement, NDPA) frame, and the first response frame is a first NDPA frame; or the first request frame is a transmit power control (transmit power control, TPC) request frame, and the first response frame is a TPC response frame; or the first request frame is a measurement pilot request frame, and the first response frame is a measurement pilot frame.

It should be understood that cases of the foregoing different first request frames and first response frames are subsequently described in detail with reference to FIG. 6, FIG. 15, and FIG. 17.

In a possible implementation, the first transmit power may be equal to a transmit power corresponding to a beacon frame or a probe response frame sent by the first access point.

S530: The first station determines the first downlink received signal quality.

The first downlink received signal quality may include one or more of a first downlink received signal strength indicator (received signal strength indicator, RSSI), a first downlink received channel power indicator (received channel power indicator, RCPI), and a first downlink received signal-to-noise indicator (received signal-to-noise indicator, RSNI).

In a possible implementation, when the first request frame is the second NDPA frame, and the first response frame is the first NDPA frame, the first station receives a first NDP frame from the first access point, and determines the first downlink received signal quality based on the first NDPA frame and/or the first NDP frame.

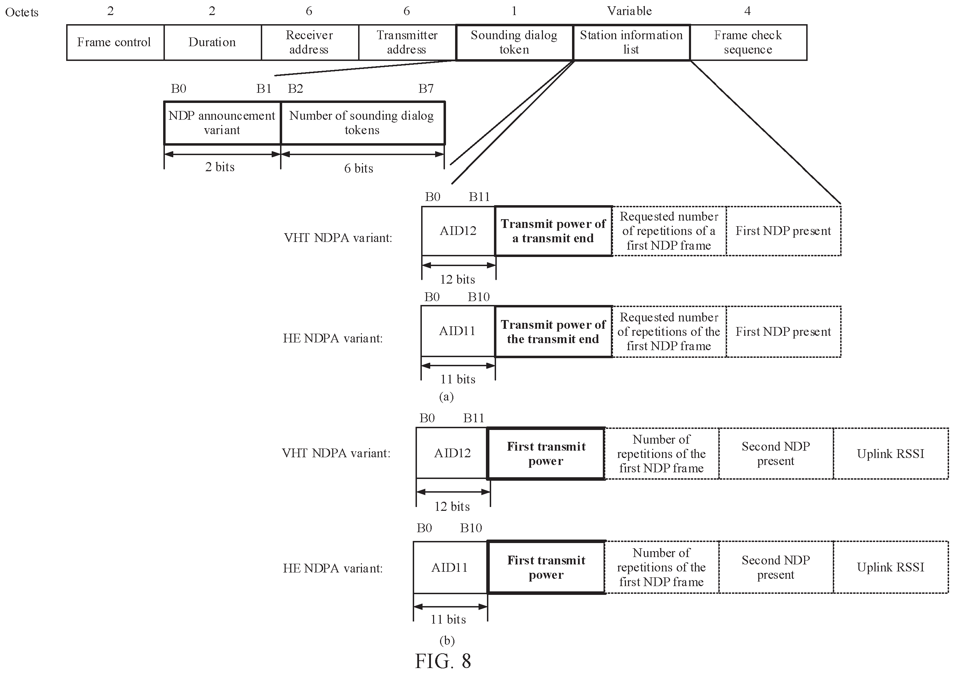

It should be understood that the NDPA frame in this embodiment of this application is subsequently described in detail with reference to FIG. 8.

In a possible implementation, when the first request frame is the TPC request frame, and the first response frame is the TPC response frame, a type of the TPC request frame and a type of the TPC response frame are defined as a class 1 (Class 1) frame or a public action frame (Public Action frame), and the first downlink received signal quality is determined based on the TPC response frame.

In a possible implementation, when the first request frame is the measurement pilot request frame, and the first response frame is the measurement pilot frame, the first downlink received signal quality is determined based on the measurement pilot frame.

S540: The first station sends the first transmit power and the first downlink received signal quality to the second access point.

In a possible implementation, the first station sends the radio measurement report frame to the second access point, where the first transmit power and the first downlink received signal quality are carried in the radio measurement report frame.

Optionally, the first station sends, to the second access point, a transmit power from another neighboring access point and downlink received signal quality corresponding to the another neighboring access point.

S550: The second access point performs BSS transition based on the first transmit power and the first downlink received signal quality.

In other words, the second access point makes a BSS transition decision based on the first transmit power and the first downlink received signal quality, that is, determines a target access point for BSS transition.

In a possible implementation, the second access point selects, from the at least one neighboring access point based on the first downlink received signal quality and the downlink received signal quality corresponding to the another neighboring access point, the target access point for BSS transition.

In a possible implementation, the second access point determines a transmission path loss between the first station and the first access point based on the first transmit power and the first downlink received signal quality. The second access point determines a transmission path loss between the another neighboring access point and the first station based on the transmit power of the another neighboring access point and the downlink received signal quality corresponding to the another neighboring access point. The second access point estimates uplink received signal quality between the first station and different access points based on transmission path losses corresponding to the different access points and a maximum transmit power of the first station. The second access point selects, from the at least one neighboring access point based on the uplink received signal quality and downlink received signal instructions that correspond to the different access points, a target access point for BSS transition.

In a possible implementation, the second access point selects, from the at least one neighboring access point based on the estimated uplink received signal quality corresponding to the different access points, the target access point for BSS transition.

It should be understood that a specific process in which the second access point selects the target access point for BSS transition is not limited in this embodiment of this application.

In the foregoing technical solution, the first station sends, to the second access point, the determined first downlink received signal quality and the first transmit power corresponding to the first access point, so that more information is provided for the second access point in a decision-making process of the target access point for BSS transition. This can help the second access point make a more proper selection, and avoids selecting an inferior neighboring access point as the target access point based on only the downlink received signal quality, thereby ensuring quality of data transmission between the first station and the target access point after BSS transition.

The following describes the foregoing solutions in detail with reference to FIG. 6 to FIG. 9 and FIG. 17 to FIG. 20.

FIG. 6 is a schematic flowchart of interaction in another communication method according to an embodiment of this application. It should be understood that, in the interaction diagram shown in FIG. 6, a first station and a first access point are used as execution bodies of the interaction diagram to illustrate the corresponding method. However, the execution bodies of the interaction diagram are not limited in this application. For example, the first station in FIG. 6 may alternatively be a chip, a chip system, or a processor that supports the first station in implementing the corresponding method, or may be a logical module or software that can implement all or a part of functions of the first station. The first access point in FIG. 6 may alternatively be a chip, a chip system, or a processor that supports the first access point in implementing the corresponding method, or may be a logical module or software that can implement all or a part of functions of the first access point.

It should be understood that, in the following, the "request frame" may be represented by a "first NDP request frame", the "response frame" may be represented by a "first NDP response frame", the "station" may be represented by a "first station", and the "downlink received signal quality" may be represented by "first downlink received signal quality".

S610: The first station sends the first NDP request frame to the first access point, to request a first NDPA frame and a first NDP frame.

The first station is not associated with the first access point. For example, as shown in FIG. 1, the first station may be a STA #2-1, and the first access point may be an AP #1.

It should be understood that the first NDP request frame is not a request frame in a strict sense.

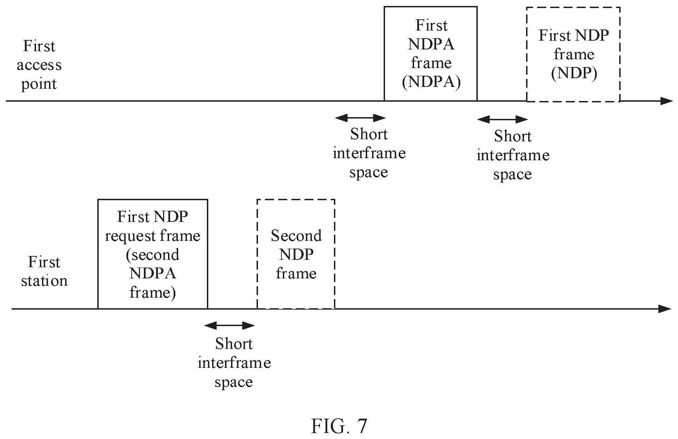

In a possible implementation, the first NDP request frame may be an NDPA frame, for example, a second NDPA frame. With reference to FIG. 7 and FIG. 8, the following describes in detail a transmission manner and a specific format used when a type of the first NDP request frame is the second NDPA frame.

S620: The first access point triggers, based on the first NDP request frame, sending of the first NDP response frame, where the first NDP response frame includes a first transmit power.

It should be understood that the first NDP response frame is not a response frame in a strict sense.

The first NDP response frame is a first NDPA frame, and the first NDPA frame includes the first transmit power.

Optionally, the first access point sends the first NDP frame to the first station, where there is a short interframe space (short interface space, SIFS) between the first NDPA frame and the first NDP frame.

It should be understood that both a transmit power of the first NDPA frame and a transmit power of the first NDP frame may be the first transmit power.

S630: The first station obtains the first downlink received signal quality based on the first NDPA frame and/or the first NDP frame.

The first transmit power and the first downlink received signal quality are used for BSS transition.

In the foregoing technical solution, downlink channel quality measurement is performed between the first station and the first access point based on control frames, for example, the NDPA frame and the NDP frame. Because an interval between the control frames is short, time for neighbor scanning and measurement by the first station can be greatly shortened, thereby reducing impact of a neighbor measurement and scanning process on data transmission of the first station.

In a possible implementation, the first transmit power may be equal to a transmit power for sending a beacon (Beacon) frame or a probe response frame by the first access point. The transmit power of the beacon frame or the probe response frame may be a maximum transmit power of the first access point.

In this way, when the first transmit power is the transmit power of the beacon frame or the probe response frame, that is, when the first transmit power is the maximum transmit power of the first access point, a subsequently obtained transmission path loss can be more accurate. For example, for a case in which a distance between the first station and the first access point is long, the first access point sends the first NDP response frame at the maximum transmit power, to avoid a case in which transmission path loss estimation between the first station and the first access point is inaccurate due to a distance factor.

Optionally, in S640, the first station grants a remaining transmit opportunity (transmit opportunity, TXOP) to the first access point, where the remaining transmit opportunity is a remaining transmit opportunity of the first station.

The first station and the second access point are associated with each other. For example, as shown in FIG. 1, the first station may be a STA #2-1, and the second access point may be an AP #2.

In a possible implementation, it is preset in the protocol that the remaining TXOP is granted to the first access point after the first station sends the first NDP request frame to the first access point.

In a possible implementation, the second NDPA frame includes fourth indication information, and the fourth indication information indicates to grant the remaining TXOP to the first access point.

For example, a reverse direction grant (reverse direction grant, RDG) field is added to the second NDPA frame, to indicate to grant the remaining TXOP to the first access point.

Optionally, the first access point indicates, in the first NDPA frame by using the remaining transmit opportunity, one or more associated stations corresponding to the first access point to perform channel sounding. In other words, the first access point indicates, by using the remaining transmit opportunity, the station associated with the first access point to perform beam training.

Optionally, after S620, a seventh NDPA frame sent by the first access point to the station associated with the first access point indicates the station associated with the first access point to collect channel sounding information.

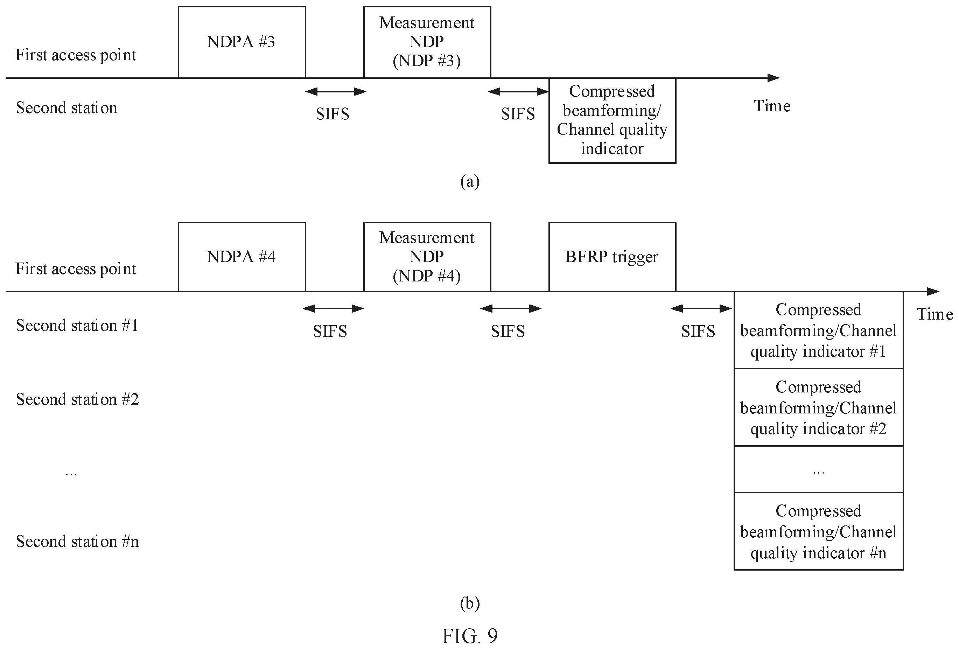

For example, as shown in FIG. 1, the first access point may be the AP #1 in FIG. 1, and the station associated with the first access point may be the STA #1 in FIG. 1. It should be understood that a process in which the first access point indicates the associated station to perform channel sounding is subsequently described in detail with reference to FIG. 9.

In the foregoing technical solution, in the process in which the first station performs neighbor scanning and measurement, a transmit opportunity between the first station and the second access point is provided to the first access point, that is, a process in which the first access point performs beam training is combined with the process of performing neighbor scanning and measurement, to improve overall operation efficiency.

The following describes in detail the schematic flowchart of interaction in the communication method shown in FIG. 6 with reference to FIG. 7. FIG. 7 is a schematic flowchart of interaction in still another communication method according to an embodiment of this application. An execution body shown in FIG. 7 is similar to that in FIG. 6, and related explanations are not described herein again.

Step 1: A first station sends a first NDP request frame to a first access point, where the first NDP request frame may be an NDPA frame, for example, a second NDPA frame.

Optionally, Step 2: After a short interframe space, the first station may send a second NDP frame to the first access point.

Step 3: After a short interframe space, the first access point sends a first NDPA frame to the first station.

Optionally, Step 4: After a short interframe space, the first access point sends a first NDP frame to the first station.

It should be understood that the foregoing steps are performed at intervals of time corresponding to a same short interframe space, or may be performed at intervals of time corresponding to different short interframe spaces. This is not limited in this embodiment of this application. Because Step 2 is an optional step, when Step 2 does not exist, only one short interframe space is required between Step 1 and Step 3.

The following describes in detail formats of the first NDP request frame and the first NDP response frame with reference to FIG. 8. FIG. 8 is a diagram of formats of a first NDP request frame and a first NDP response frame according to an embodiment of this application. An example in which the first NDP request frame shown in (a) in FIG. 8 is a second NDPA frame is used for description, and an example in which the first NDP response frame shown in (b) in FIG. 8 is a first NDPA frame is used for description.

As shown in (a) in FIG. 8, the second NDPA frame includes a frame control (Frame Control) field, a duration (Duration) field, a receiver address (receiver address, RA) field, a transmitter address (transmitter address, TA) field, a sounding dialog token (Sounding Dialog Token) field, a station information list (STA Info List) field, and a frame check sequence (frame check sequence, FCS) field. A size of the frame control field is 2 octets, a size of the duration field is 2 octets, a size of the receiver address field is 6 octets, a size of the transmitter address field is 6 octets, a size of the sounding dialog token field is 1 octet, a size of the station information list field is variable, and a size of the frame control field is 4 octets.

The frame control field is used to carry protocol version information, frame type information, and the like. The frame type information specifically includes two fields: a type (Type) field and a subtype (Subtype) field. If the second NDPA frame is a control frame, the type field and the subtype field may be respectively set to 01 and 0101. The duration field indicates remaining time of a transmit opportunity. The receiver address field indicates a receiver address. The transmitter address field indicates a transmitter address.

As shown in (a) in FIG. 8, the sounding dialog token field includes an NDP announcement variant (NDP Announcement Variant) field and a sounding dialog token number (Sounding Dialog Token Number) field. A size of the NDP announcement variant field is 2 bits, and a size of the sounding dialog token number field is 6 bits. A specific value of the NDP announcement variant field may be shown in Table 5.

**Table 5**

| Value of the NDP announcement variant field | NDPA variant |
|---|---|
| 0 | Very high throughput NDPA (very high throughput, VHT) NDPA |
| 1 | Ranging NDPA or sensing NDPA Ranging NDPA or Sensing NDPA |
| 2 | High efficiency NDPA (high efficiency, HE) NDPA |
| 3 | Extremely high throughput NDPA (extremely high throughput, EHT) NDPA |

For example, a length of each station information field corresponding to the VHT NDPA is 2 bytes. A length of each station information field corresponding to the sensing NDPA is 4 bytes, a value of an association identifier (association identifier, AID) field in the first station information field is 2045, and a value of a 32^{nd} bit (namely, a bit numbered B31) of the station information field is 1. A length of each station information field corresponding to the HE NDPA is 4 bytes. A length of each station information field corresponding to the EHT NDPA is 4 bytes.

The following uses VHT NDPA and HE NDPA as examples to describe in detail a format of a station information field corresponding to a second NDPA frame variant in this embodiment of this application. In this case, values of the NDP announcement variants are 0 and 2, respectively.

In this embodiment of this application, in a possible implementation, the second NDPA frame includes a fourth AID field, and a fifth value of the fourth AID field indicates that a field corresponding to a transmit power of a transmit end exists. In this case, the transmit power of the transmit end is a transmit power for sending the second NDPA frame by the first station to the first access point, or is a transmit power for sending the second NDPA frame and the second NDP frame by the first station to the first access point, where the transmit power of the second NDPA frame may be the same as the transmit power of the second NDP frame.

For example, as shown in (a) in FIG. 8, a special value in an AID12 field, for example, 2046, in a station information field corresponding to the VHT NDPA variant indicates that a transmit power field of the transmit end exists in the station information field corresponding to the VHT NDPA variant. Alternatively, a special value in an AID11 field, for example, 2046, in a station information field corresponding to the HE NDPA variant indicates that a transmit power field of the transmit end exists in the station information field corresponding to the HE NDPA variant.

In a possible implementation, the second NDPA frame includes indication information of the transmit power of the transmit end.

For example, as shown in (a) in FIG. 8, the station information field corresponding to the VHT NDPA or HE NDPA variant may further include a transmit power field of the transmit end, and the transmit power field may indicate the transmit power of the second NDPA frame. Alternatively, the transmit power field may indicate the transmit power of the second NDPA frame and a transmit power of a second NDPA frame that is immediately sent thereafter.

In a possible implementation, the second NDPA frame may further include a requested first number of repetitions of a long training field (long training fields, LTFs) set in the first NDP frame, or include a requested second number of repetitions of the first NDP frame.

It should be understood that the fourth AID field may further indicate that a first number of repetitions field or a second number of repetitions field exists.

For example, as shown in (a) in FIG. 8, the station information field corresponding to the VHT NDPA or HE NDPA variant may further include a requested first number of repetitions of a long training field LTFs set in the first NDP frame, or includes a requested second number of repetitions of the first NDP frame.

In this way, when performing channel sounding based on the first NDP frame, the first station may perform a plurality of measurements based on the first NDP frame that is repeated for a plurality of times, thereby improving downlink channel sounding accuracy of the first station.

In a possible implementation, the second NDPA frame further includes a first NDP present field, and the first NDP present field indicates whether a second NDP frame is sent following the second NDPA frame.

It should be understood that the fourth AID field may further indicate that the first NDP present field exists.

For example, as shown in (a) in FIG. 8, the station information field corresponding to the VHT NDPA or HE NDPA variant may further include a first NDP present field, and a second NDP present field indicates whether the second NDP frame is sent following the second NDPA frame.

Specifically, 1 bit in the station information field corresponding to the VHT NDPA or HE NDPA variant indicates whether the second NDP frame exists.

In this way, message sending can be flexibly performed by setting the NDP frame as an optional message frame by using the field. For example, if only the first station needs to perform downlink channel sounding, bandwidth resources can be saved, and signaling overheads can be reduced.

Correspondingly, a format of the first NDPA frame described in (b) in FIG. 8 is similar to a format of the second NDPA frame.

In a possible implementation, the first NDPA frame includes a first AID field, and a first value of the first AID indicates that a field corresponding to the first transmit power exists.

For example, as shown in (b) in FIG. 8, a special value in an AID12 field, for example, 2046, in the station information field corresponding to the VHT NDPA variant indicates that a first transmit power field exists in the station information field corresponding to the VHT NDPA variant. Alternatively, a special value in an AID11 field, for example, 2046, in the station information field corresponding to the HE NDPA variant indicates that a first transmit power field exists in the station information field corresponding to the HE NDPA variant.

In a possible implementation, the first NDPA frame includes the first transmit power field.

For example, as shown in (b) in FIG. 8, the station information field corresponding to the VHT NDPA or HE NDPA variant includes the first transmit power field, and the first transmit power field indicates transmit powers of the first NDPA frame and the first NDP frame.

In a possible implementation, the first NDPA frame further includes a first number of repetitions of an LTFs set in the first NDP frame, or includes a second number of repetitions of the first NDP frame.

It should be understood that the first AID field may further indicate that a first number of repetitions field or a second number of repetitions field exists.

For example, as shown in (b) in FIG. 8, the station information field corresponding to the VHT NDPA or HE NDPA variant includes a first number of repetitions of an LTFs set in the first NDP frame, or includes a second number of repetitions of the first NDP frame.

In a possible implementation, the first NDPA frame includes a second NDP present field, and a second value of the second NDP present field indicates that the first NDP frame is sent following the first NDPA frame.

It should be understood that the first AID field may further indicate that the second NDP present field exists.

For example, as shown in (b) in FIG. 8, if the station information field corresponding to the VHT NDPA or HE NDPA variant includes the second NDP present field, a value of the second NDP present field is set to 1, indicating that the first NDP frame is sent at an SIFS interval after the first NDPA frame.

In a possible implementation, when a first NDP present field included in the second NDPA frame indicates that the second NDP frame is sent immediately following the second NDPA frame, the first access point may obtain uplink received signal quality based on the second NDP frame, and the first NDPA frame may further include the uplink received signal quality.

For example, the station information field corresponding to the VHT NDPA or HE NDPA variant further includes the uplink received signal quality.

In this way, the first station can simultaneously obtain channel quality between the first station and the first access point. This can avoid a case in which, due to asymmetry between uplink and downlink, the second access point subsequently selects an inappropriate candidate access point for BSS transition.

The following describes in detail an optional implementation of S640 with reference to FIG. 9. FIG. 9 is schematic flowchart of interaction in channel sounding performed by an access point according to an embodiment of this application. It should be understood that execution bodies shown in FIG. 9 are a first access point and a second station. Explanations of the first access point and the second station are similar to those of the first access point and the first station. For details, refer to FIG. 6. The second station may be the STA #2 shown in FIG. 1, and the station is associated with the first access point.

In an interaction procedure shown in FIG. 9, an example in which the first access point sends an NDPA frame and the second station measures downlink channel quality and feeds back the downlink channel quality is used. The measurement manner shown in FIG. 9 may be classified into two channel measurement manners based on a number of beamformees. A first channel measurement manner, as shown in (a) in FIG. 9, is non-trigger (non-TB)-based channel sounding, and there is only one beamformee. A second channel measurement manner, as shown in (b) in FIG. 9, is trigger-based (trigger-based, TB) channel sounding, and there are a plurality of beamformees. Because channel sounding may also be referred to as beam training, the first access point in FIG. 9 may also be referred to as a beamformer, and the second station may also be referred to as a beamformee.

As shown in (a) in FIG. 9, Step 1: The first access point sends an NDPA #3 to the second station. Step 2: After an SIFS interval, the first access point sends an NDP #3 to the second station. Step 3: After an SIFS interval, the second station sends compressed beamforming or a channel quality indicator (channel quality indicator, CQI) to the first access point.

For example, the NDPA #3 may be an HE NDPA.

The NDPA #3 indicates which stations need to measure a next NDP and a corresponding parameter of the NDP.

As shown in (b) in FIG. 9, Step 1: The first access point sends an NDPA #4 to a plurality of second stations. Step 2: After an SIFS interval, the first access point sends an NDP #4 to the plurality of second stations. Step 3: After an SIFS interval, the first access point sends a BFRP trigger frame to the plurality of second stations. Step 4: After an SIFS interval, the plurality of second stations sequentially send compressed beamforming or channel quality indicators to the first access point.

During beam training, a number of high efficiency long training fields (high efficiency long training field, HE-LTF) carried in the NDP #3 or the NDP #4 is a supported maximum number of transmit streams, and is usually equal to a number of transmit antennas.

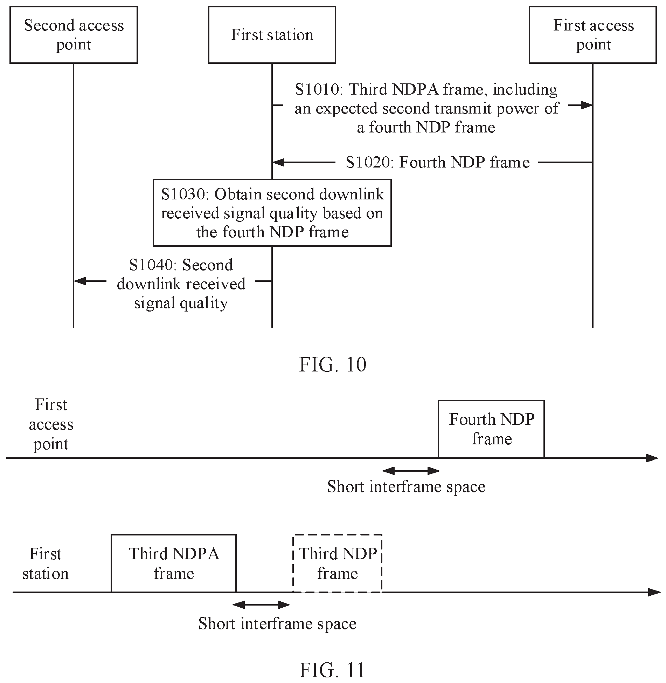

FIG. 10 is a schematic flowchart of yet another communication method according to an embodiment of this application. It should be understood that an execution body of the schematic flowchart of interaction in the method shown in FIG. 10 is similar to that in FIG. 6, and details are not described herein again.

S1010: A first station sends a third NDPA frame to a first access point, where the third NDPA frame includes an expected second transmit power of a fourth NDP frame.

In a possible implementation, the second transmit power may be carried in a radio measurement request frame by a second access point, for example, in a radio measurement request frame whose measurement type is a beacon request.

In a possible implementation, the first access point sends the second transmit power to the second access point via wired communication of a DS. The second transmit power is an expected transmit power of the second access point, or the second transmit power is an expected transmit power of the first station.

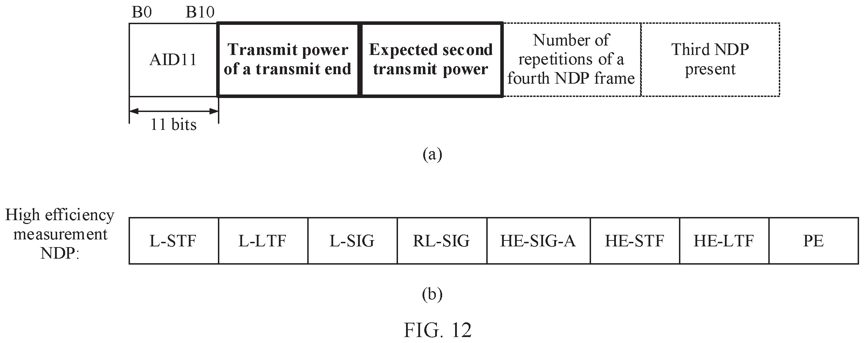

It should be understood that a specific format of the third NDPA frame is described in detail in (a) in FIG. 12. A transmission manner of the third NDPA frame is described in detail in FIG. 11.

S1020: The first access point sends the fourth NDP frame to the first station at the second transmit power.

S1030: The first station obtains second downlink received signal quality based on the fourth NDP frame.

It should be understood that the second downlink received signal quality may include one or more of a second downlink RSSI, a second downlink RCPI, and a second downlink RSNI.

S1040: The first station sends the second downlink received signal quality to the second access point, where the second downlink received signal quality is used for BSS transition.

In the foregoing technical solution, the first station directly sends, to the first access point by using the NDPA frame, the expected transmit power corresponding to the first access point, and then the first access point sends an NDP frame at an expected transmit power, so that the second access point can properly select an appropriate target access point when subsequently performing BSS transition. For example, if the second transmit power, that is, the expected transmit power, is learned by the second access point from the first access point in advance, the second access point may learn both the second transmit power and the second downlink received signal quality. In this case, the second access point can select an appropriate target access point for BSS transition, and signaling overheads of an air interface are also reduced.

Optionally, in the solution in FIG. 10, a receiver address in the third NDPA frame may include identifier information of the first access point. In the solution procedure in FIG. 10, a receiver address field in the third NDPA frame may also be set to a broadcast address, that is, the third NDPA frame carries identifier or address information of at least one neighboring access point. Each neighboring access point that receives the broadcast third NDPA frame sequentially sends an NDP frame to the first station. For example, the first access point sends the fourth NDP frame to the first station.

It should be understood that, in this optional solution, the expected second transmit power carried in the third NDPA frame may be the smallest one of at least one transmit power sent by the at least one neighboring access point to the second access point in a wired manner of the DS.

The following describes in detail the schematic flowchart of interaction in the communication method shown in FIG. 10 with reference to FIG. 11. FIG. 11 is a schematic flowchart of interaction in yet another communication method according to an embodiment of this application. An execution body shown in FIG. 11 is similar to that in FIG. 10, and related explanations are not described herein again.

Step 1: A first station sends a third NDPA frame to a first access point.

Optionally, Step 2: After a short interframe space, the first station may send a third NDP frame to the first access point.

Step 4: After a short interframe space, the first access point sends a first NDP frame to the first station.

It should be understood that the foregoing steps are performed at intervals of time corresponding to a same short interframe space, or may be performed at intervals of time corresponding to different short interframe spaces. This is not limited in this embodiment of this application. Because Step 2 is an optional step, when Step 2 does not exist, only one short interframe space is required between Step 1 and Step 3.

The following describes in detail formats of the third NDPA frame and the fourth NDP frame with reference to FIG. 12. FIG. 12 is a diagram of the formats of the third NDPA frame and the fourth NDP frame according to an embodiment of this application. The third NDPA frame shown in (a) in FIG. 12 is described by using an NDPA frame variant as an example, and the fourth NDP frame shown in (b) in FIG. 12 is described by using a high efficiency measurement NDP as an example.

It should be understood that, for detailed descriptions of common fields in (a) in FIG. 12, refer to (a) in FIG. 8. Details are not described herein.

In a possible implementation, the third NDPA frame may include a second AID field, and a third value of the second AID field indicates that a field corresponding to a second transmit power exists. As described in (a) in FIG. 12, a special value in an AID 11 field, for example, 2046, may indicate that the field corresponding to the second transmit power exists.

In a possible implementation, the third NDPA frame may include an expected second transmit power field. As shown in (a) of FIG. 12, for example, the NDPA frame variant includes the expected second transmit power field.

In a possible implementation, the third NDPA frame may further include a field corresponding to a transmit power of the transmit end. As shown in (a) in FIG. 12, for example, the NDPA frame variant includes the field corresponding to the transmit power of the transmit end.

It should be understood that the second AID field may further indicate that the field corresponding to the transmit power of the transmit end exists.

In a possible implementation, the third NDPA frame further includes a requested number of repetitions of a long training field LTFs set in the fourth NDP frame, or includes a requested number of repetitions of the fourth NDP frame. As shown in (a) in FIG. 12, for example, the NDPA frame variant includes a number of repetitions field of the fourth NDP frame.

It should be understood that the second AID field may further indicate that a field corresponding to the number of repetitions of the LTFs set or the requested number of repetitions included in the fourth NDP frame exists.

In a possible implementation, the third NDPA frame further includes a third NDP present field, and the third NDP present field indicates whether a third NDP frame is sent following the third NDPA frame, as shown in (a) in FIG. 12.

It should be understood that the second AID field may further indicate that the third NDP present field exists.

In a possible implementation, when the third NDP present field indicates that the third NDP frame is sent following the third NDPA frame, the third NDP frame is sent to the first access point after a short interframe space after the third NDPA frame is sent to the first access point. The third NDP frame is used by the first access point to measure third uplink received signal quality.

As shown in (b) in FIG. 12, if the fourth NDP frame is a high efficiency measurement NDP frame, the fourth NDP frame includes a legacy short training field (legacy short training field, L-STF), a legacy long training field (legacy long training field, L-LTF), a legacy signal field (legacy signal field, L-SIG), a repeated legacy signal field (Repeated legacy signal field, RL-SIG), a high efficiency signal (high efficiency signal, HE-SIG-A) field, a high efficiency short training field (high efficiency short training field, HE-STF), and a high efficiency long training field (high efficiency long training field, HE-LTF).

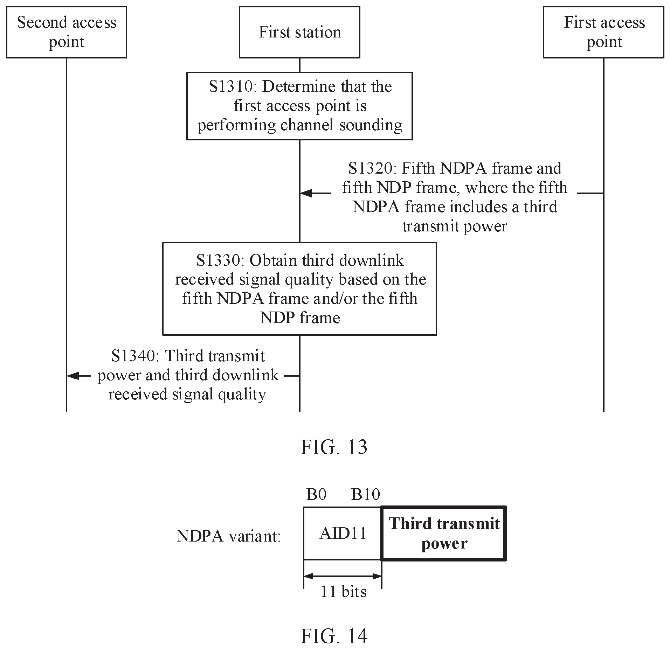

FIG. 13 is a schematic flowchart of interaction in yet another communication method according to an embodiment of this application. It should be understood that an execution body of the schematic flowchart of interaction in the method shown in FIG. 13 is similar to that in FIG. 6, and details are not described herein again.

S1310: A first station determines that a first access point is performing channel sounding.

Specifically, when the first station prepares to send a first request frame by contending for a channel, it is determined that the first access point is performing channel sounding.

S1320: The first station receives a fifth NDPA frame and a fifth NDP frame from the first access point, where the fifth NDPA frame includes a third transmit power.

The third transmit power may be understood as a transmit power for sending the fifth NDPA frame and the fifth NDP frame by the first access point.

It should be understood that a possible format of the fifth NDPA frame is subsequently described in detail with reference to FIG. 14.

It should be understood that the first access point does not sense an action of determining, by the first station, that the first access point performs channel sounding. In S1320, a current channel sounding procedure of the first access point is combined, and the third transmit power is carried in the current channel sounding procedure of the first access point.

In a possible implementation, the third transmit power may be equal to a transmit power corresponding to a beacon frame or a probe response frame sent by the first access point.

S1330: The first station obtains third downlink received signal quality based on the fifth NDPA frame and/or the fifth NDP frame.

It should be understood that the third downlink received signal quality may include one or more of a third downlink RSSI, a third downlink RCPI, and a third downlink RSNI.

S1340: The first station sends the third transmit power and the third downlink received signal quality to a second access point.

In the foregoing technical solution, when the first station finds that the first access point is performing channel sounding, the first station does not need to send the first request frame, a procedure used by the first access point for channel sounding still continues, and the third transmit power is carried in the fifth NDPA frame. This helps the second access point subsequently select a more appropriate target access point for BSS transition by using fewer signaling overheads, thereby ensuring subsequent data transmission quality of the first station.

The following describes a format of the fifth NDPA frame in detail with reference to FIG. 14. FIG. 14 is a diagram of the format of the fifth NDPA frame according to an embodiment of this application. The fifth NDPA frame shown in FIG. 14 is an NDPA frame variant.

In a possible implementation, the fifth NDPA frame includes a third transmit power field. For example, as shown in FIG. 14, the NDPA frame variant includes the third transmit power field.

In a possible implementation, the fifth NDPA frame includes a third AID field, and a fourth value of the third AID field indicates that a field corresponding to the third transmit power exists. For example, as shown in FIG. 14, a special value in an AID11 field, for example, 2046, may indicate that an HE NDPA frame variant includes the third transmit power field.

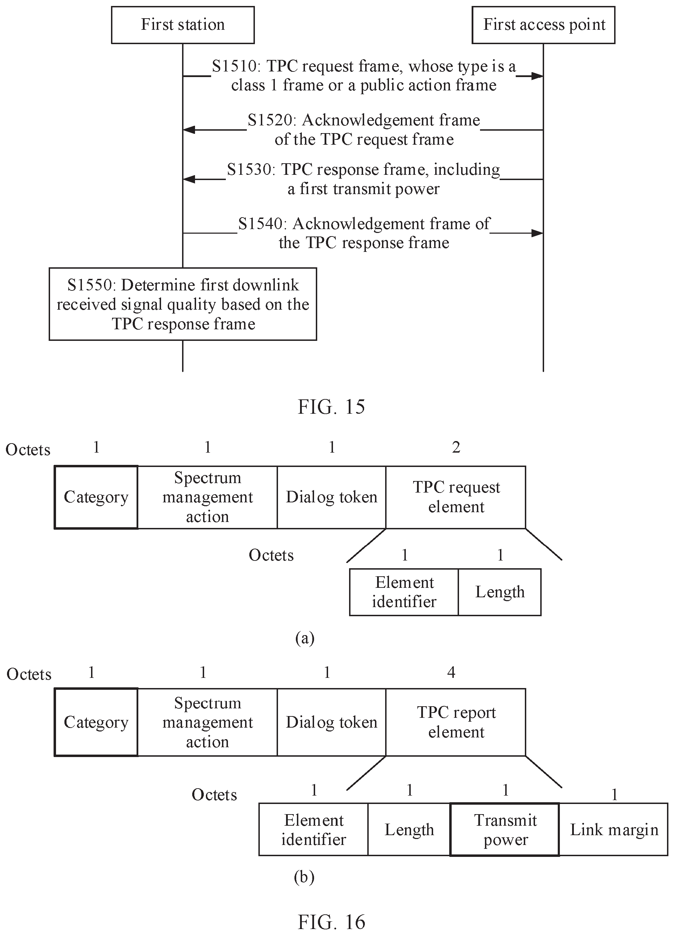

FIG. 15 is a schematic flowchart of yet another communication method according to an embodiment of this application. It should be understood that an execution body of the schematic flowchart of interaction in the method shown in FIG. 15 is similar to that in FIG. 6, and details are not described herein again. FIG. 15 shows a case in which the first request frame is the TPC request frame and the first response frame is the TPC response frame in FIG. 5.

It should be understood that, in the following, the "request frame" may be represented by a "TPC request frame", the "response frame" may be represented by a "TPC response frame", the "station" may be represented by a "first station", and the "downlink received signal quality" may be represented by "first downlink received signal quality".

S1510: The first station sends the TPC request frame to a first access point, where a type of the TPC request frame is defined as a class 1 (Class 1) frame.

The class 1 frame may alternatively be defined as a public action frame. It should be understood that, when the type of the TPC request frame is the public action frame, the first station may send the TPC request frame to the unassociated first access point.

S1520: The first access point sends an acknowledgement frame of the TPC request frame to the first station.

S1530: The first access point sends the TPC response frame to the first station, where the TPC response frame includes a first transmit power.

It should be understood that the first access point performs channel contention again, to send the TPC response frame.

It should be understood that specific formats of the TPC request frame and the TPC response frame are described in detail in FIG. 16.

S1540: The first station sends an acknowledgement frame of the TPC response frame to the first access point.

S1550: The first station determines first downlink received signal quality based on the TPC response frame.

In the foregoing technical solution, the first transmit power of the first access point is obtained based on the TPC request frame and the TPC response frame, and a current measurement mode in which downlink received signal quality measurement is performed based on a beacon frame or a probe request frame is used. In this solution, because the TPC request frame and the TPC response frame carry less information, channel resource consumption and signaling overheads can be reduced. In addition, this helps the second access point subsequently make a more proper selection, and avoids selecting an inferior neighboring access point as a target access point based on only the downlink received signal quality, thereby ensuring quality of data transmission between the first station and the target access point after BSS transition.

FIG. 16 is a diagram of the formats of the TPC request frame and the TPC response frame according to an embodiment of this application.

As shown in (a) in FIG. 16, the TPC request frame includes a category (Category) field, a spectrum management action (Radio Management Action) field, a dialog token (Dialog Token) field, and a TPC request element (TPC Request element) field. A size of the category field is 1 octet, a size of the spectrum measurement action field is 1 octet, a size of the dialog token field is 1 octet, and a size of the TPC request field is 2 octets. The category field indicates a category to which the action frame belongs. For example, for spectrum measurement, a value of the category field is set to 0. A specific description of the spectrum measurement action field is shown in Table 6.

**Table 6**

| Value of the spectrum management action field | Description |
|---|---|
| 0 | Spectrum measurement request (Spectrum Measurement Request) |
| 1 | Spectrum measurement report (Spectrum Measurement Report) |
| 2 | TPC request (TPC Request) |
| 3 | TPC report (TPC Report) |
| 4 | Channel switch announcement (Channel Switch Announcement) |
| 5-255 | Reserved |

When a value of the dialog token field is set to a non-zero value, the dialog token field indicates specific request/report interaction.

The TPC request element field includes an element identifier (Element ID) field and a length (Length) field.

As shown in (b) in FIG. 16, the TPC response frame (which may also be referred to as a TPC report frame) may include a category field, a spectrum management action field, a dialog token field, and a TPC report element (TPC Report element) field. Functions of the category field, the spectrum management action field, and the dialog token field are similar to those of fields corresponding to the TPC request frame, and details are not described herein again.

The TPC report element field includes an element identifier field, a length field, a transmit power (Transmit Power) field, and a link margin (Link Margin) field. The link margin field indicates a link margin measured based on the TPC request frame. When the TPC report element field is carried in the beacon frame or the probe response frame, the link margin field is reserved.

The transmit power field indicates a transmit power of the frame carrying the TPC report element field.

In this embodiment of this application, the first transmit power included in the TPC response frame may be specifically indicated by using the transmit power field.

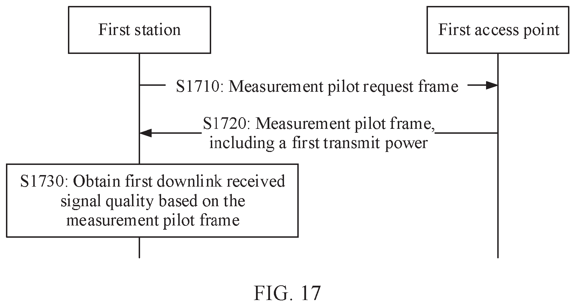

FIG. 17 is a schematic flowchart of yet another communication method according to an embodiment of this application. It should be understood that an execution body of the schematic flowchart of interaction in the method shown in FIG. 17 is similar to that in FIG. 6, and details are not described herein again. FIG. 17 shows a case in which the first request frame is the measurement pilot request frame and the first response frame is the measurement pilot frame in FIG. 5.

It should be understood that, in the following, the "request frame" may be represented by a "measurement pilot request frame", the "response frame" may be represented by a "measurement pilot frame", the "station" may be represented by a "first station", and the "downlink received signal quality" may be represented by "first downlink received signal quality".

S1710: The first station sends the measurement pilot request frame to a first access point, where the measurement pilot request frame is used to trigger sending of the measurement pilot frame.

S1720: The first access point sends the measurement pilot frame to the first station, where the measurement pilot frame includes a first transmit power.

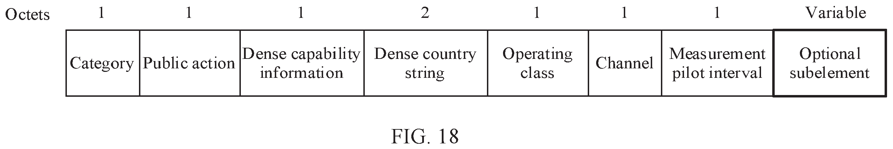

FIG. 18 is a diagram of a format of the measurement pilot frame according to an embodiment of this application.

As shown in FIG. 18, the measurement pilot frame includes a category field, a public action field, a dense capability information field, a dense country string field, an operating class field, a channel field, a measurement pilot interval field, and an optional subelement field. A size of the category field is 1 octet, a size of the public action field is 1 octet, a size of the dense capability information field is 1 octet, a size of the dense country string field is 2 octets, a size of the operating class field is 1 octet, a size of the channel field is 1 octet, a size of the measurement pilot interval field is 1 octet, and a size of the optional subelement field is variant. The measurement pilot field indicates a sending interval of the measurement pilot frame.

In a possible implementation, the first transmit power included in the measurement pilot frame may be a subelement that uses the TPC report element field shown in FIG. 16 as the optional subelement field of the measurement pilot frame, where the TPC report element field includes an indication field of the first transmit power.

S1730: The first station determines first downlink received signal quality based on the TPC response frame.

In the foregoing technical solution, sending of the measurement pilot frame is triggered by using the measurement pilot request frame, and a current measurement mode of the measurement pilot frame is still used. Compared with current periodic detection of the measurement pilot frame, this can reduce time for performing neighbor scanning and measurement by the first station, and ensure data transmission of the first station.

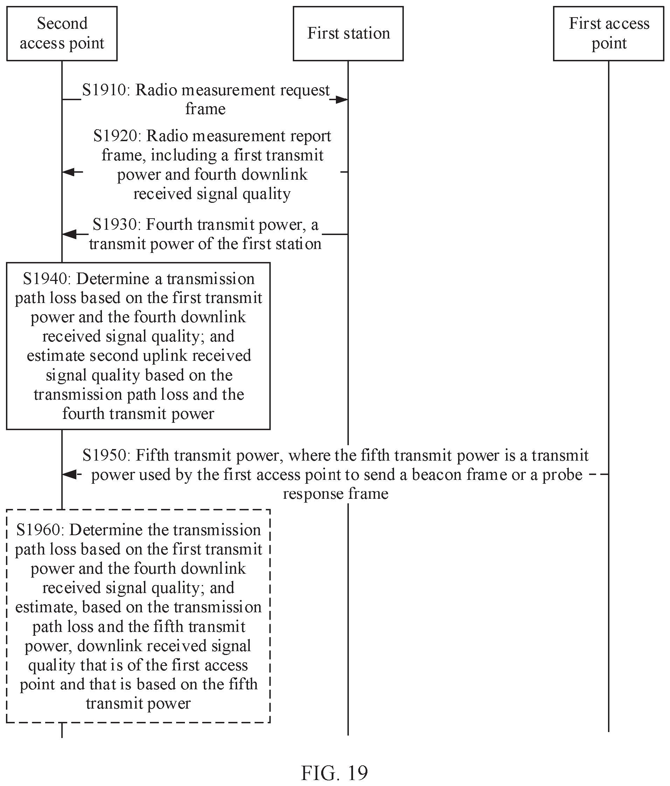

FIG. 19 is a schematic flowchart of yet another communication method according to an embodiment of this application. It should be understood that an execution body of the schematic flowchart of interaction in the method shown in FIG. 19 is similar to that in FIG. 5, and details are not described herein again.

S1910: A second access point sends a radio measurement request frame to a first station, to request a channel quality measurement result between the first station and at least one neighboring access point corresponding to the first station. The at least one neighboring access point includes a first access point.

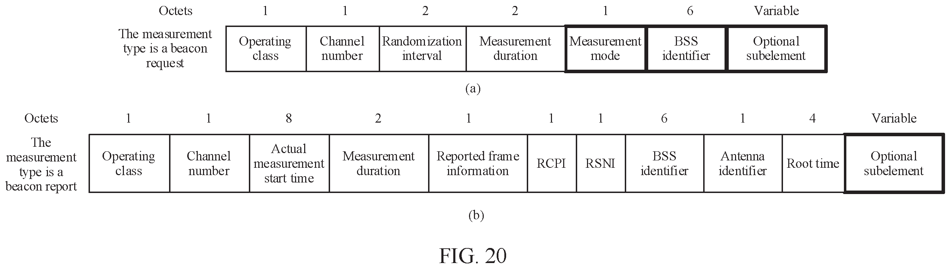

It should be understood that a specific field of the radio measurement request frame is described in detail in FIG. 20.

S1920: The first station sends a radio measurement report frame to the second access point, where the radio measurement report frame includes a first transmit power and fourth downlink received signal quality.

It should be understood that a manner in which the first station obtains the first transmit power may be any one of the foregoing solutions. The fourth downlink received signal quality may be the first downlink received signal quality, the second downlink received signal quality, or the third downlink received signal quality in the foregoing solutions.

S1930: The first station sends a fourth transmit power to the second access point, where the fourth transmit power is a transmit power of the first station.

S1940: The second access point determines a transmission path loss between the first station and the first access point based on the first transmit power and the fourth downlink received signal quality; and estimates second uplink received signal quality based on the transmission path loss and the fourth transmit power.

The second uplink received signal quality and the fourth downlink received signal quality are used for BSS transition.

Specifically, the second access point determines a transmission path loss between another neighboring access point and the first station based on a transmit power of the another neighboring access point and downlink received signal quality corresponding to the another neighboring access point. The second access point estimates uplink received signal quality between the first station and different access points based on transmission path losses corresponding to the different access points and a maximum transmit power corresponding to the first station. The second access point selects, from the at least one neighboring access point based on the uplink received signal quality and downlink received signal instructions that correspond to the first station and the different access points, a target access point for BSS transition.

Optionally, in S1950, the first access point sends a fifth transmit power to the second access point, where the fifth transmit power may be a transmit power used by the first access point to send a beacon frame or a probe response frame.

In a possible implementation, the first access point transmits the fifth transmit power to the second access point in a wired manner of a DS.

The fifth transmit power may also be understood as a maximum transmit power of the first access point.

Optionally, in S1960, the second access point determines the transmission path loss between the first station and the first access point based on the first transmit power and the fourth downlink received signal quality; and estimates, based on the transmission path loss and the fifth transmit power, the downlink received signal quality that is of the first access point and that is based on the fifth transmit power.

If the first access point subsequently sends the beacon frame or the probe response frame by using the fifth transmit power, the second access point may estimate, according to the foregoing steps, the downlink received signal quality that is of the first access point and that is based on the beacon frame or the probe response frame.

In the foregoing technical solution, the second access point may obtain both the uplink received signal quality and the downlink received signal quality between the first access point and the first station, so that asymmetry between uplink and downlink caused by a large difference between transmit powers of the first access point and the first station can be well handled, thereby helping the second access point select a more appropriate target access point for BSS transition, and further ensuring data transmission quality of the first station.

FIG. 20 is a diagram of formats of the measurement request field and the measurement report field according to an embodiment of this application. It should be understood that a measurement request field whose measurement type is a beacon request is used as an example in (a) in FIG. 20, and a measurement report field whose measurement type is a beacon report is used as an example in (b) in FIG. 20. It should be understood that another field of the radio measurement request frame is omitted in (a) in FIG. 20. For details, refer to FIG. 3. Another field of the radio measurement request frame is omitted in (b) in FIG. 20. For details, refer to FIG. 4.

In a possible implementation, the radio measurement frame includes identifier indication information of the at least one neighboring access point.

For example, the radio measurement request frame includes second indication information, and the second indication information indicates identifier information of the first access point. As shown in (a) in FIG. 20, a BSS identifier field in a measurement request field in a measurement request element field of the radio measurement request frame may include address information of the first access point.

In a possible implementation, the radio measurement request frame includes first indication information, and the first indication information indicates the first station to send the first request frame.

It should be understood that the first indication information indicates a new measurement mode, that is, the communication method between the first station and the first access point provided in this embodiment of this application.

For example, as shown in (a) in FIG. 20, a value of a measurement mode field in the measurement request field in the measurement request element field of the radio measurement request frame is set to 3, or the first indication information may be represented by combining an existing value of the measurement mode field with another field. A specific form of the first indication information is not limited in this embodiment of this application.

In a possible implementation, the radio measurement request frame further includes third indication information, and the third indication information indicates that a subsequent radio measurement report frame does not include information that is related to the first access point and that is other than a first transmit power and first downlink received signal quality.

Specifically, as shown in (a) in FIG. 20, a value of a report detail field in an optional subelement field in the measurement request field in the measurement request element field of the radio measurement request frame is set to 0. It should be understood that the third indication information may alternatively be represented by using another field. This is not limited in this embodiment of this application.

In a possible implementation, the first transmit power included in the radio measurement report frame may be a subelement by using the TPC report element field shown in FIG. 16 as the optional subelement field in the measurement report field of the radio measurement report frame, where the TPC report element field includes an indication field of the first transmit power.

For example, as shown in (b) in FIG. 20, indication information of the first transmit power may be carried in the optional subelement field.

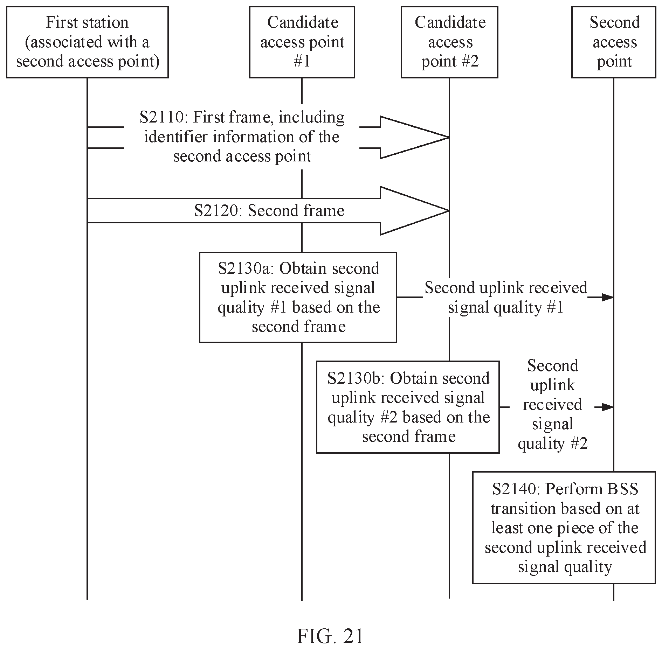

FIG. 21 is a schematic flowchart of yet another communication method according to an embodiment of this application. Execution bodies in FIG. 21 may include a first station, a candidate access point #1, a candidate access point #2, and a second access point. It should be understood that, for detailed explanations of the execution bodies, refer to FIG. 5. Details are not described herein again. It should be understood that a number of candidate access points in FIG. 21 is merely an example, and the number of candidate access points is not limited in this embodiment of this application.

S2110: The first station sends a sixth NDPA frame to any candidate access point in a broadcast manner.

In a possible implementation, the sixth NDPA frame includes identifier information of the second access point associated with the first station, for example, address information of the second access point.

The any candidate access point is not associated with the first station, and the any candidate access point and the second access point belong to a same extended service set. For example, the any candidate access point may be the candidate access point #1 or the candidate access point #2 in FIG. 21.

Optionally, an identifier of the second access point may be further carried in another message, so that at least one candidate access point learns of the identifier of the second access point in a broadcast manner.

S2120: After a short interframe space, the first station sends a sixth NDP frame to the any candidate access point in a broadcast manner.

S2130: The any candidate access point determines second uplink received signal quality based on the sixth NDP frame, and sends the second uplink received signal quality to the second access point.

For example, in S2130a, the candidate access point #1 determines second uplink received signal quality #1 based on the sixth NDP frame, and sends the second uplink received signal quality #1 to the second access point; and in S2130b, the candidate access point #2 determines second uplink received signal quality #2 based on the sixth NDP frame, and sends the second uplink received signal quality #2 to the second access point.

Specifically, the candidate access point performs transmission with the second access point in a wired manner of a DS.

S2140: The second access point performs BSS transition based on at least one piece of the second uplink received signal quality.

Specifically, the second access point selects, based on at least one piece of the second uplink received signal quality, an appropriate target access point for BSS transition.

In the foregoing technical solution, the candidate access point measures the uplink received signal quality, and directly feeds back the uplink received signal quality to the second access point. This can reduce air interface resources, and also does not affect data transmission of the first station.

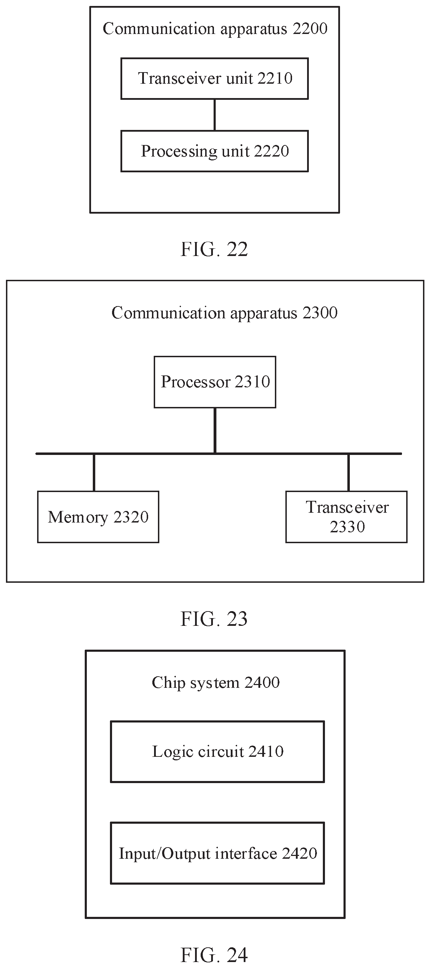

The following describes in detail a communication apparatus provided in embodiments of this application with reference to FIG. 22 to FIG. 24. It should be understood that descriptions of apparatus embodiments correspond to the descriptions of the method embodiments. Therefore, for content that is not described in detail, refer to the foregoing method embodiments. For brevity, some content is not described again.

FIG. 22 is a diagram of a communication apparatus 2200 according to an embodiment of this application. The apparatus 2200 may include a processing unit 2220, and the processing unit 2220 is configured to process data. The apparatus 2200 may further include a transceiver unit 2210. The transceiver unit 2210 may implement a corresponding communication function. The transceiver unit 2210 may also be referred to as a communication interface, a communication unit, or an interface unit. It should be understood that unless otherwise specified, or if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 2200 may further include a storage unit. The storage unit may be configured to store instructions and/or data. The processing unit 2220 may read the instructions and/or data in the storage unit, to enable the apparatus to implement the foregoing method embodiments.

The apparatus 2200 may be configured to perform an action performed by the first station in the foregoing method embodiments. In this case, the apparatus 2200 may be a communication device or a component that can be configured in the communication device. The transceiver unit 2210 is configured to perform a sending/receiving-related operation on the communication device side in the foregoing method embodiments. The processing unit 2220 is configured to perform a processing-related operation of the first station in the foregoing method embodiments.

In a design, the apparatus 2200 is configured to perform an action performed by the first station in the method embodiments shown in FIG. 5, FIG. 6, FIG. 15, FIG. 17, or FIG. 19. An execution body may be a chip, a chip system, or a processor that supports the first station in implementing the corresponding method, or may be a logical module or software that can implement all or a part of functions of the first station.

Specifically, the transceiver unit 2210 is configured to send a first request frame to a first access point, where the first request frame is used to trigger sending of a first response frame, and the first station is not associated with the first access point.

The transceiver unit 2210 is configured to receive the first response frame from the first access point, where the first response frame includes a first transmit power for sending the first response frame.

The processing unit 2220 is configured to determine first downlink received signal quality.

The transceiver unit 2210 is configured to send the first transmit power and the first downlink received signal quality to a second access point, where the first transmit power and the first downlink received signal quality are used for basic service set BSS transition, the second access point is associated with the first station, and the first access point and the second access point belong to a same extended service set.

For parts that are not described in detail, refer to the foregoing method embodiments.

In a design, the communication apparatus 2200 is configured to perform an action performed by the first access point in the method embodiment shown in FIG. 5, FIG. 6, FIG. 15, or FIG. 17. The execution body may be a chip, a chip system, or a processor that supports the first access point in implementing the corresponding method, or may be a logical module or software that can implement all or a part of functions of the first access point.

Specifically, the transceiver unit 2210 is configured to receive a first request frame from a first station, where the first station is not associated with the first access point. The processing unit 2210 is configured to trigger sending of a first response frame to the first station, where the first response frame includes a first transmit power for sending the first response frame, and the first transmit power is used for basic service set BSS transition.

For parts that are not described in detail, refer to the foregoing method embodiments.

In a design, the communication apparatus 2200 is configured to perform an action performed by the second access point in the method embodiment shown in FIG. 5 or FIG. 19. The execution body may be a chip, a chip system, or a processor that supports the second access point in implementing the corresponding method, or may be a logical module or software that can implement all or a part of functions of the second access point.

Specifically, the transceiver unit 2210 is configured to receive the first transmit power and first downlink received signal quality that are sent by the first station, where the first transmit power is a transmit power corresponding to the first response frame sent by the first access point to the first station, the first downlink received signal quality is downlink received signal quality between the first station and the first access point, and the first station is not associated with the first access point. The processing unit 2220 is configured to perform basic service set BSS transition based on the first transmit power and the first downlink received signal quality, where the second access point is associated with the first station, and the first access point and the second access point belong to a same extended service set.

For parts that are not described in detail, refer to the foregoing method embodiments.

In a design, the communication apparatus 2200 is configured to perform an action performed by the first station in the method embodiment shown in FIG. 10. The execution body may be a chip, a chip system, or a processor that supports the first station in implementing the corresponding method, or may be a logical module or software that can implement all or a part of functions of the first station.

Specifically, the transceiver unit 2210 is configured to send a third NDPA frame to a first access point, where the third NDPA frame is used to trigger sending of a fourth NDP frame, the first station is not associated with the first access point, and the third NDPA frame includes an expected second transmit power corresponding to the fourth NDP frame sent by the first access point. The transceiver unit 2210 is configured to receive the fourth NDP frame sent by the first access point at the second transmit power. The processing unit 2220 is configured to obtain second downlink received signal quality based on the fourth NDP frame. The transceiver unit 2210 is configured to send the second downlink received signal quality to a second access point, where the second access point is associated with the first station, and the first access point and the second access point belong to a same extended service set.

For parts that are not described in detail, refer to the foregoing method embodiments.

In a design, the communication apparatus 2200 is configured to perform an action performed by the first station in the method embodiment shown in FIG. 13. The execution body may be a chip, a chip system, or a processor that supports the first station in implementing the corresponding method, or may be a logical module or software that can implement all or a part of functions of the first station.

Specifically, the processing unit 2220 is configured to determine that a first access point is performing channel sounding, and the first station is not associated with the first access point. The transceiver unit 2210 is configured to receive a fifth NDPA frame and a fifth NDP frame from the first access point, where the fifth NDPA frame includes a third transmit power for sending the third NDPA frame and the fifth NDP frame. The processing unit 2220 is configured to determine third downlink received signal quality based on the fifth NDP frame. The transceiver unit 2210 is configured to send the third transmit power and a third downlink received signal instruction to a second access point, where the third transmit power and the third downlink received signal instruction are used for basic service set BSS transition, the first station is associated with the second access point, and the first access point and the second access point belong to a same extended service set.

For parts that are not described in detail, refer to the foregoing method embodiments.

In a design, the communication apparatus 2200 is configured to perform an action performed by any one of the at least one candidate access point in the method embodiment shown in FIG. 21. The execution body may be a chip, a chip system, or a processor that supports any one of the at least one candidate access point in implementing the corresponding method, or may be a logical module or software that can implement all or a part of functions of any one of the at least one candidate access point.

Specifically, the transceiver unit 2210 is configured to receive a first frame from a first station, where the first frame includes identifier information of a second access point associated with the first station, any candidate access point is not associated with the first station, and the any candidate access point and the second access point belong to a same extended service set. The transceiver unit 2210 is configured to receive a second frame from the first station, where the second frame is used to obtain second uplink received signal quality. The transceiver unit 2210 is configured to send the second uplink received signal quality to the second access point.

For parts that are not described in detail, refer to the foregoing method embodiments.

It should be understood that a specific process in which the units perform the foregoing corresponding steps is described in detail in the foregoing method embodiments, and for brevity, details are not described herein.

The processing unit 2220 in the foregoing embodiment may be implemented by at least one processor or a processor-related circuit. The transceiver unit 2210 may be implemented by using a transceiver or a transceiver-related circuit. The storage unit may be implemented by at least one memory.

FIG. 23 is a diagram of a structure of a communication apparatus 2300 according to an embodiment of this application.

As shown in FIG. 23, an embodiment of this application further provides a communication apparatus 2300. The apparatus 2300 includes a processor 2310. The processor 2310 is coupled to a memory 2320. The memory 2320 is configured to store a computer program or instructions and/or data. The processor 2310 is configured to execute the computer program or the instructions and/or the data stored in the memory 2320, so that the methods in the foregoing method embodiments are performed.

Optionally, the apparatus 2300 includes one or more processors 2310.

Optionally, as shown in FIG. 23, the apparatus 2300 may further include the memory 2320.

Optionally, the apparatus 2300 may include one or more memories 2320.

Optionally, the memory 2320 and the processor 2310 may be integrated together, or separately disposed.

Optionally, as shown in FIG. 23, the apparatus 2300 may further include a transceiver 2330, and the transceiver 2330 is configured to receive and/or send a signal. For example, the processor 2310 is configured to control the transceiver 2330 to receive and/or send a signal.

In a solution, the apparatus 2300 is configured to implement an operation performed by any one of the first station, the first access point, the second access point, or the at least one candidate access point in the foregoing method embodiments.

For example, the processor 2310 is configured to implement processing-related operations performed by any one of the first station, the first access point, the second access point, or the at least one candidate access point in the foregoing method embodiments, and the transceiver 2330 is configured to implement sending/receiving-related operations performed by any one of the first station, the first access point, the second access point, or the at least one candidate access point in the foregoing method embodiments.

FIG. 24 is a diagram of a chip system 2400 according to an embodiment of this application. As shown in FIG. 24, the chip system 2400 (or may be referred to as a processing system) includes a logic circuit 2410 and an input/output interface (input/output interface) 2420. The logic circuit is configured to be coupled to the input interface, and transmit a data parameter through the input/output interface, to perform the methods in the foregoing method embodiments. A device in which the chip system 2400 is installed may implement the methods and functions in embodiments of this application. For example, the logic circuit 2410 may be a processing circuit in the chip system 2400, to control the device in which the chip system 2400 is installed, or may be coupled to a storage unit, and invoke instructions in the storage unit, so that the device can implement the methods and functions in embodiments of this application. The input/output interface 2420 may be an input/output circuit in the chip system 2400, to output information processed by the chip system 2400, or input to-be-processed data or signaling information to the chip system 2400 for processing.

In a solution, the chip system 2400 is configured to implement an operation performed by the communication apparatus (for example, any one of the first station, the first access point, the second access point, or the at least one candidate access point) in the foregoing method embodiments.

For example, the logic circuit 2410 is configured to implement processing-related operations performed by any one of the first station, the first access point, the second access point, or the at least one candidate access point in the foregoing method embodiments, and the input/output interface 2420 is configured to implement sending/receiving-related operations performed by any one of the first station, the first access point, the second access point, or the at least one candidate access point in the foregoing method embodiments.

An embodiment of this application further provides a computer-readable storage medium. The computer-readable storage medium stores computer instructions used to implement the method performed by the communication apparatus (for example, any one of the first station, the first access point, the second access point, or the at least one candidate access point) in the foregoing method embodiments.

For example, when the computer program is executed by a computer, the computer is enabled to implement the method performed by the communication apparatus (for example, any one of the first station, the first access point, the second access point, or the at least one candidate access point) in the foregoing method embodiments.

An embodiment of this application further provides a computer program product including instructions. When the instructions are executed by a computer, the computer is enabled to implement the method performed by the communication apparatus (for example, any one of the first station, the first access point, the second access point, or the at least one candidate access point) in the foregoing method embodiments.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a station and comprises:
sending a request frame to a first access point, wherein the request frame is used to trigger sending of a response frame, and the station is not associated with the first access point;
receiving the response frame from the first access point, wherein the response frame comprises a first transmit power for sending the response frame;
determining downlink received signal quality; and
sending the transmit power and the downlink received signal quality to a second access point, wherein the transmit power and the downlink received signal quality are used for basic service set BSS transition, the second access point is associated with the station, and the first access point and the second access point belong to a same extended service set.

2. The method according to claim 1, wherein the request frame is a second null data packet announcement NDPA frame, and the response frame is a first NDPA frame; or the request frame is a transmit power control TPC request frame, and the response frame is a TPC response frame; or the request frame is a measurement pilot request frame, and the response frame is a measurement pilot frame.

3. The method according to claim 2, wherein when the request frame is the second NDPA frame, and the response frame is the first NDPA frame, the method further comprises: receiving a first null data packet NDP frame from the first access point; and
determining the downlink received signal quality comprises: determining the downlink received signal quality based on the first NDP frame.

4. The method according to claim 2, wherein after sending the request frame to the first access point, the method further comprises:
granting a remaining transmit opportunity to the first access point, wherein the remaining transmit opportunity is a remaining transmit opportunity of the station.

5. The method according to claim 3 or 4, wherein the first NDPA frame comprises a first field, and a first value of the first field indicates that a field corresponding to the first transmit power exists.

6. The method according to any one of claims 3 to 5, wherein the second NDPA frame further comprises a first number of repetitions of a long training field LTFs set in the first NDP frame, or comprises a second number of repetitions of the first NDP frame; and the response frame further comprises the first number of repetitions or the second number of repetitions.

7. The method according to any one of claims 3 to 6, wherein the second NDPA frame further comprises a first NDP present field, and the first NDP present field indicates whether a second NDP frame is sent following the second NDPA frame.

8. The method according to any one of claims 3 to 7, wherein the first NDPA frame comprises a second NDP present field, and a second value of the second NDP present field indicates that the first NDP frame is sent following the first NDPA frame.

9. The method according to claim 7, wherein when the first NDP present field indicates that the second NDP frame is sent following the second NDPA frame, the method further comprises:
sending the second NDP frame to the first access point, wherein the second NDP frame is used by the first access point to measure first uplink received signal quality; and
the first NDPA frame further comprises the first uplink received signal quality.

10. The method according to claim 2, wherein when the request frame is the TPC request frame, and the response frame is the TPC response frame, types of the TPC request frame and the TPC response frame are public action frames; and
determining the downlink received signal quality comprises:
determining the downlink received signal quality based on the TPC response frame.

11. The method according to claim 2, wherein when the request frame is the measurement pilot request frame, and the response frame is the measurement pilot frame, determining the downlink received signal quality comprises:
determining the downlink received signal quality based on the measurement pilot frame.

12. The method according to any one of claims 1 to 11, wherein the first transmit power is equal to a transmit power corresponding to a beacon frame or a probe response frame sent by the first access point.

13. The method according to any one of claims 1 to 12, wherein before sending the request frame to the first access point, the method further comprises:
receiving a radio measurement request frame from the second access point, wherein the radio measurement request frame is used to request a channel quality measurement result between the station and at least one neighboring access point corresponding to the station, and the at least one neighboring access point comprises the first access point; and
sending a radio measurement report frame to the second access point, wherein the first transmit power and the downlink received signal quality are carried in the radio measurement report frame.

14. The method according to claim 13, wherein the radio measurement request frame comprises first indication information, and the first indication information indicates the station to send the request frame.

15. The method according to claim 13 or 14, wherein the radio measurement request frame further comprises second indication information, and the second indication information indicates identifier information of the first access point.

16. The method according to any one of claims 13 to 15, wherein the radio measurement request frame further comprises third indication information, and the third indication information indicates that the radio measurement report frame does not comprise information that is related to the first access point and that is other than the first transmit power and the downlink received signal quality.

17. A communication method, wherein the method is applied to a second access point and comprises:
receiving a first transmit power and downlink received signal quality from a station, wherein the first transmit power is a transmit power corresponding to a response frame sent by a first access point to the station, the downlink received signal quality is downlink received signal quality between the station and the first access point, and the station is not associated with the first access point; and
performing basic service set BSS transition based on the first transmit power and the downlink received signal quality, wherein the second access point is associated with the station, and the first access point and the second access point belong to a same extended service set.

18. The method according to claim 17, wherein the method further comprises:
sending a radio measurement request frame to the station, wherein the radio measurement request frame is used to request a channel quality measurement result between the station and at least one neighboring access point corresponding to the station, and the at least one neighboring access point comprises the first access point; and
receiving a radio measurement report frame from the station, wherein the radio measurement report frame comprises the first transmit power and the downlink received signal quality.

19. The method according to claim 17 or 18, wherein the method further comprises:
receiving a fourth transmit power corresponding to the station; and
performing basic service set BSS transition based on the first transmit power and the downlink received signal quality comprises:
determining a transmission path loss between the station and the first access point based on the first transmit power and the downlink received signal quality; and
estimating second uplink received signal quality based on the transmission path loss and the fourth transmit power, wherein the second uplink received signal quality is uplink received signal quality between the first access point and the station.

20. The method according to any one of claims 17 to 19, wherein
the radio measurement request frame comprises first indication information, and the first indication information indicates the station to send the request frame.

21. The method according to any one of claims 17 to 20, wherein the radio measurement request frame further comprises second indication information, and the second indication information indicates identifier information of the first access point.

22. The method according to any one of claims 17 to 21, wherein the radio measurement request frame further comprises third indication information, and the third indication information indicates that the radio measurement report frame does not comprise information that is related to the first access point and that is other than the first transmit power and the downlink received signal quality.

23. A communication apparatus, wherein the apparatus comprises a unit configured to implement the method according to any one of claims 1 to 16, or the apparatus comprises a unit configured to implement the method according to any one of claims 17 to 22.

24. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 16, or to enable the apparatus to perform the method according to any one of claims 17 to 22.

25. A communication system, comprising an apparatus configured to implement the method according to any one of claims 1 to 16 and an apparatus configured to implement the method according to any one of claims 17 to 22.

26. A computer-readable storage medium, wherein the computer-readable storage medium stores a computer program or instructions, and when the computer program or the instructions are run on a computer, the computer is enabled to perform the method according to any one of claims 1 to 16, or the computer is enabled to perform the method according to any one of claims 17 to 22.

27. A chip, wherein the chip is coupled to a memory, and is configured to read and execute program instructions stored in the memory, to implement the method according to any one of claims 1 to 16, or to implement the method according to any one of claims 17 to 22.
